# EUROPEAN PATENT APPLICATION

(11) **EP 4 394 962 A1**
(43) Date of publication of application: **03.07.2024**
(21) Application number: 22919445.1
(22) Date of filing: 14.01.2022
(51) Int. Cl.: H01M 10/04

(54) **ELECTRODE ASSEMBLY, BATTERY CELL, BATTERY, AND METHOD AND DEVICE FOR MANUFACTURING ELECTRODE ASSEMBLY**

(71) Applicant: Contemporary Amperex Technology Co., Limited, Ningde, Fujian 352100 (CN)
(72) Inventor: ZHANG, Xiaowei, Ningde, Fujian 352100 (CN); ZHANG, Wei, Ningde, Fujian 352100 (CN); WU, Xiang, Ningde, Fujian 352100 (CN); HUANG, Guoda, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Gong, Jinping
(86) International application number: PCT/CN2022/071926
(87) International publication number: WO 2023/133785

(57) **Abstract**

Embodiments of the present application provide an electrode assembly, a battery cell, a battery, and a method and device for preparing an electrode assembly. The electrode assembly includes: a first electrode plate layer, a first separator, a second electrode plate layer and a second separator, which are wound to form the electrode assembly. A winding start end of the first electrode plate layer, a winding start end of the first separator, and a winding start end of the second separator are substantially aligned with one another. The first electrode plate layer includes a first insulating section and a first electrode plate connected to each other, and the end of the first insulating section away from the first electrode plate is the winding start end of the first electrode plate layer. The second electrode plate layer includes a second electrode plate having the polarity opposite to that of the first electrode plate. Along a winding direction of the electrode assembly, the winding start end of the second electrode plate layer is substantially aligned with the winding start end of the first electrode plate layer, or is located downstream of the winding start end of the first electrode plate layer. The electrode assembly, the battery cell, the battery, the method and device for preparing an electrode assembly of the embodiments of the present application can improve the manufacturing efficiency of the electrode assembly.

## Description

### Technical Field

The present application relates to the technical field of batteries, and particularly to an electrode assembly, a battery cell, a battery, an electrical device, and a method and device for preparing an electrode assembly.

### Background

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

The overall production process of the battery is long and complicated, including a series of procedures such as coating, plate production, winding, assembling, laser welding, and liquid injection. The manufacturing process of an electrode assembly inside a battery cell is particularly important, which will directly affect the manufacturing efficiency and performance of the battery cell. Therefore, how to improve the manufacturing efficiency of the electrode assembly is a technical problem to be solved urgently.

### Summary of the Invention

Embodiments of the present application provide an electrode assembly, a battery cell, a battery, a method and device for preparing an electrode assembly, which can improve the manufacturing efficiency of the electrode assembly.

In a first aspect, provided is an electrode assembly, including: a first electrode plate layer, a first separator, a second electrode plate layer and a second separator, the first electrode plate layer, the first separator, the second electrode plate layer and the second separator being wound to form the electrode assembly, wherein the first separator and the second separator are configured to isolate the first electrode plate layer from the second electrode plate layer, and a winding start end of the first electrode plate layer, a winding start end of the first separator and a winding start end of the second separator are substantially aligned with one another; the first electrode plate layer includes a first insulating section and a first electrode plate connected to each other, and the first insulating section is arranged at the winding start end of the first electrode plate; the end of the first insulating section away from the first electrode plate is the winding start end of the first electrode plate layer; the second electrode plate layer includes a second electrode plate, and the polarity of the second electrode plate is opposite to that of the first electrode plate; and along a winding direction of the electrode assembly, a winding start end of the second electrode plate layer is substantially aligned with the winding start end of the first electrode plate layer, or the winding start end of the second electrode plate layer is located downstream of the winding start end of the first electrode plate layer.

Therefore, when the electrode assembly of the embodiment of the present application is being wound, at least the first electrode plate layer may be initially wound synchronously with the first separator and the second separator, that is, the feeding of the first electrode plate layer where the first electrode plate is located will not be delayed due to not relying on frictional force, so that the problem of offset and corner folding of an initial winding head of the first electrode plate is avoided, thereby improving the manufacturing efficiency of the electrode assembly. Moreover, the first insulating section included in the first electrode plate layer can also increase the strength of the central area of the electrode assembly to avoid the collapse of the central area caused by insufficient strength of the central area. Especially, when the winding start ends of the first electrode plate layer and the second electrode plate layer are also substantially aligned with each other, the problems of offset and corner folding of the initial winding heads of both the first electrode plate and the second electrode plate can be avoided, and the feeding of each of the two electrode plate layers will not be delayed due to not relying on frictional force, so it is also possible to greatly increase the initial winding speed and acceleration of the electrode assembly, significantly shortening the manufacturing time, and further improving the manufacturing efficiency of the electrode assembly. Moreover, the first electrode plate layer and the second electrode plate layer added in the central area of the electrode assembly can greatly improve the strength of the central area, thereby avoiding the collapse of the central area.

In some embodiments, the first insulating section includes a first insulating sublayer and a second insulating sublayer arranged opposite to each other, and the first insulating sublayer and the second insulating sublayer clamp at least a partial area of the winding start end of the first electrode plate such that the first insulating section is connected to the first electrode plate.

By arranging the first insulating sublayer 2111 and the second insulating sublayer 2112 to clamp at least a partial area of the winding start end 2121 of the first electrode plate 212, the partial area of the winding start end 2121 of the first electrode plate 212 overlaps with a partial area of one end of the first insulating section 211, so that the connection strength between the first insulating section 211 and the first electrode plate 212 can be improved, ensuring the strength and stability of the electrode assembly 2.

In some embodiments, the first electrode plate layer further includes a second insulating section connected to the first electrode plate; the second insulating section is arranged at a winding terminal end of the first electrode plate, and the end of the second insulating section away from the first electrode plate is a winding terminal end of the first electrode plate layer; the winding terminal end of the first electrode plate layer, a winding terminal end of the first separator and a winding terminal end of the second separator are substantially aligned with one another; and along the winding direction of the electrode assembly, a winding terminal end of the second electrode plate layer is substantially aligned with the winding terminal end of the first electrode plate layer, or the winding terminal end of the second electrode plate layer is located upstream of the winding terminal end of the first electrode plate layer.

The winding terminal end 215 of the first electrode plate layer 21, the winding terminal end 222 of the first separator 22 and the winding terminal end 242 of the second separator 24 are also arranged to be substantially aligned with one another, so that it is possible to synchronously cut the first electrode plate layer 21, the first separator 22 and the second separator 24 during mass production of electrode assemblies 2, further improving the manufacturing efficiency. Moreover, the synchronous cutting of the terminal ends can also avoid the offset of the winding terminal end 215 of the first electrode plate layer 21, thereby improving the overall alignment of the electrode assembly 2, improving the ability to control a winding deviation correction process, and then increasing the energy density of the battery cell.

In some embodiments, the second insulating section includes a third insulating sublayer and a fourth insulating sublayer arranged opposite to each other, and the third insulating sublayer and the fourth insulating sublayer clamp at least a partial area of the winding terminal end of the first electrode plate such that the second insulating section is connected to the first electrode plate.

By arranging the third insulating sublayer 2131 and the fourth insulating sublayer 2132 to clamp at least a partial area of the winding terminal end 2122 of the first electrode plate 212, the partial area of the winding terminal end 2122 of the first electrode plate 212 overlaps with a partial area of one end of the second insulating section 213, so that the connection strength between the second insulating section 213 and the first electrode plate 212 can be improved, ensuring the strength and stability of the electrode assembly 2.

In some embodiments, the second electrode plate layer includes a third insulating section connected to the second electrode plate; the third insulating section is arranged at a winding start end of the second electrode plate; and the end of the third insulating section away from the second electrode plate is the winding start end of the second electrode plate layer.

By reasonably setting the length and position of the third insulating section 231, the winding start end 221 of the first separator 22, the winding start end 214 of the first electrode plate layer 21, the winding start end 241 of the second separator 24 and the winding start end 234 of the second electrode plate layer 23 of the electrode assembly 2 formed by winding can be substantially aligned with one another such that the first separator 22, the first electrode plate layer 21, the second separator 24 and the second electrode plate layer 23 are initially wound synchronously, avoiding the delayed feeding of the first electrode plate layer 21 and the second electrode plate layer 21 due to relying on frictional force, thereby avoiding the offset and corner folding of the initial winding heads of both the first electrode plate 212 and the second electrode plate 232, and it is also possible to greatly increase the initial winding speed and acceleration, significantly shortening the manufacturing time, improving the winding efficiency, reducing the cost of winding, and further improving the manufacturing efficiency of the electrode assembly 2. In addition, the first insulating section 211 of the first electrode plate layer 21 and the third insulating section 231 of the second electrode plate layer 23 added to the central area of the electrode assembly 2 can greatly increase the strength of the central area, thereby avoiding the collapse of the central area caused by insufficient strength of the central area.

In some embodiments, the third insulating section includes a fifth insulating sublayer and a sixth insulating sublayer arranged opposite to each other, and the fifth insulating sublayer and the sixth insulating sublayer clamp at least a partial area of the winding start end of the second electrode plate such that the third insulating section is connected to the second electrode plate.

By arranging the fifth insulating sublayer 2311 and the sixth insulating sublayer 2312 to clamp at least a partial area of the winding start end 2321 of the second electrode plate 232, the partial area of the winding start end 2321 of the second electrode plate 232 overlaps with a partial area of one end of the third insulating section 231, so that the connection strength between the third insulating section 231 and the second electrode plate 232 can be improved, ensuring the strength and stability of the electrode assembly 2.

In some embodiments, the second electrode plate layer further includes a fourth insulating section connected to the second electrode plate; the fourth insulating section is arranged at a winding terminal end of the second electrode plate, and the end of the fourth insulating section away from the second electrode plate is the winding terminal end of the second electrode plate layer.

By reasonably setting the length and position of the fourth insulating section 233, the winding terminal end 215 of the first electrode plate layer 21, the winding terminal end 222 of the first separator 22, the winding terminal end 235 of the second electrode plate layer 23 and the winding terminal end 242 of the second separator 24 of the electrode assembly 2 formed by winding can also be substantially aligned with one another, so that the first electrode plate layer 21, the first separator 22, the second electrode plate layer 23 and the second separator 24 can all be cut synchronously during mass production of electrode assemblies 2, further improving the manufacturing efficiency. Moreover, the synchronous cutting of the terminal ends can also avoid the offset of the winding terminal end 215 of the first electrode plate layer 21 and the winding terminal end 235 of the second electrode plate layer 23, thereby improving the end alignment of the first electrode plate layer 21 of the electrode assembly 2 and the end alignment of the second electrode plate layer 23, improving the ability to control the winding deviation correction process, and then increasing the energy density of the battery cell.

In some embodiments, the fourth insulating section includes a seventh insulating sublayer and an eighth insulating sublayer arranged opposite to each other, and the seventh insulating sublayer and the eighth insulating sublayer clamp at least a partial area of the winding terminal end of the second electrode plate such that the fourth insulating section is connected to the second electrode plate.

By arranging the seventh insulating sublayer 2331 and the eighth insulating sublayer 2332 to clamp at least a partial area of the winding terminal end 2322 of the second electrode plate 232, the partial area of the winding terminal end 2322 of the second electrode plate 232 overlaps with a partial area of one end of the fourth insulating section 233, so that the connection strength between the fourth insulating section 233 and the second electrode plate 232 can be improved, ensuring the strength and stability of the electrode assembly 2.

In some embodiments, the first electrode plate is a positive electrode plate and the second electrode plate is a negative electrode plate, in the winding direction of the electrode assembly, the first insulating section has a length greater than that of the third insulating section and the first electrode plate has a length less than that of the second electrode plate, and in a winding axis direction of the electrode assembly, the first electrode plate has a length less than that of the second electrode plate, so as to avoid lithium plating.

Alternatively, the first electrode plate is a negative electrode plate and the second electrode plate is a positive electrode plate, in the winding direction of the electrode assembly, the first insulating section has a length less than that of the third insulating section and the first electrode plate has a length greater than that of the second electrode plate, and in the winding axis direction of the electrode assembly, the first electrode plate has a length greater than that of the second electrode plate, so as to avoid lithium plating.

In some embodiments, the first electrode plate is a positive electrode plate and the second electrode plate is a negative electrode plate, and in the winding direction of the electrode assembly, the second insulating section of the first electrode plate layer has a length greater than that of the fourth insulating section, so as to avoid lithium plating.

Alternatively, the first electrode plate is a negative electrode plate and the second electrode plate is a positive electrode plate, and in the winding direction of the electrode assembly, the second insulating section of the first electrode plate layer has a length less than that of the fourth insulating section, so as to avoid lithium plating.

In some embodiments, at least one of the first insulating section, the second insulating section, the third insulating section and the fourth insulating section is provided with a plurality of through holes, so as to ensure the infiltration effect of the electrode assembly 2 in the battery cell, facilitating the uniform infiltration of an electrolyte solution, thereby ensuring the performance and the service life of the battery cell.

In a second aspect, provided is a battery cell, including the electrode assembly in the first aspect or according to any one of the embodiments in the first aspect.

In a third aspect, provided is a battery, including a plurality of battery cells, each of which is the battery cell in the first aspect.

In a fourth aspect, provided is an electrical device, including the battery in the third aspect.

In some embodiments, the electrical device is a vehicle, a ship or a spacecraft.

In a fifth aspect, provided is a method for preparing an electrode assembly, the method including: providing a first electrode plate layer assembly, a first separator assembly, a second electrode plate layer assembly and a second separator assembly, wherein the first electrode plate layer assembly includes a first insulating member and a first electrode plate connected to each other, and one end of the first insulating member is connected to a winding start end of the first electrode plate; and the second electrode plate layer assembly includes a second electrode plate, and the polarity of the second electrode plate is opposite to that of the first electrode plate; performing a first cutting on the first electrode plate layer assembly, the first separator assembly and the second separator assembly at the first insulating member, and performing a first cutting on the second electrode plate layer assembly, to obtain a first electrode plate layer, a first separator, a second electrode plate layer and a second separator, wherein the first separator and the second separator are configured to isolate the first electrode plate layer from the second electrode plate layer, a part of the cut first insulating member forms a first insulating section connected to the first electrode plate, the first electrode plate layer includes the first insulating section and the first electrode plate, and the end of the first insulating section away from the first electrode plate is a winding start end of the first electrode plate layer; and winding the first electrode plate layer, the first separator, the second electrode plate layer and the second separator to form the electrode assembly, wherein the winding start end of the first electrode plate layer, a winding start end of the first separator and a winding start end of the second separator are substantially flush with one another; and along a winding direction of the electrode assembly, a winding start end of the second electrode plate layer is substantially aligned with the winding start end of the first electrode plate layer, or the winding start end of the second electrode plate layer is located downstream of the winding start end of the first electrode plate layer.

In a sixth aspect, provided is a device for preparing an electrode assembly, the device including modules for implementing the method in the foregoing fifth aspect.

### Description of Drawings

Fig. 1 is a schematic cross-sectional diagram of a conventional electrode assembly;
Fig. 2 is a schematic diagram of an apparatus for manufacturing the conventional electrode assembly;
Fig. 3 is an exploded schematic structural diagram of the conventional electrode assembly;
Fig. 4 is a schematic structural diagram of a vehicle disclosed in an embodiment of the present application;
Fig. 5 is a schematic cross-sectional diagram of an electrode assembly disclosed in an embodiment of the present application;
Fig. 6 is a schematic cross-sectional diagram of a further electrode assembly disclosed in an embodiment of the present application;
Fig. 7 is a schematic cross-sectional diagram of a still further electrode assembly disclosed in an embodiment of the present application;
Fig. 8 is a schematic cross-sectional diagram of a yet further electrode assembly disclosed in an embodiment of the present application;
Fig. 9 is a schematic cross-sectional diagram of a still yet further electrode assembly disclosed in an embodiment of the present application;
Fig. 10 is a schematic cross-sectional diagram of another electrode assembly disclosed in an embodiment of the present application;
Fig. 11 is a schematic cross-sectional diagram, taken along the thickness direction, of a first electrode plate assembly and a second electrode plate assembly disclosed in an embodiment of the present application;
Fig. 12 is another schematic cross-sectional diagram, taken along the thickness direction, of a first electrode plate assembly and a second electrode plate assembly disclosed in an embodiment of the present application;
Fig. 13 is a schematic cross-sectional diagram, taken along the thickness direction, of a first electrode plate layer assembly and a second electrode plate layer assembly disclosed in an embodiment of the present application;
Fig. 14 is a schematic diagram of any one of surfaces of a first electrode plate layer assembly and a second electrode plate layer assembly disclosed in an embodiment of the present application;
Fig. 15 is a schematic diagram of an apparatus for winding an electrode assembly disclosed in an embodiment of the present application;
Fig. 16 is a schematic diagram of a further apparatus for winding an electrode assembly disclosed in an embodiment of the present application;
Fig. 17 is a schematic diagram of a still further apparatus for winding an electrode assembly disclosed in an embodiment of the present application;
Fig. 18 is a schematic diagram of a yet further apparatus for winding an electrode assembly disclosed in an embodiment of the present application;
Fig. 19 is a schematic diagram of a still yet further apparatus for winding an electrode assembly disclosed in an embodiment of the present application;
Fig. 20 is a schematic diagram of another apparatus for winding an electrode assembly disclosed in an embodiment of the present application;
Fig. 21 is a partial exploded schematic structural diagram of an electrode assembly disclosed in an embodiment of the present application;
Fig. 22 is a schematic diagram of a deployed first electrode plate layer and second electrode plate layer of an electrode assembly disclosed in an embodiment of the present application;
Fig. 23 is a schematic flow chart of a method for preparing an electrode assembly disclosed in an embodiment of the present application; and
Fig. 24 is a schematic block diagram of a device for preparing an electrode assembly disclosed in an embodiment of the present application.

In the accompanying drawings, the figures are not necessarily drawn to scale.

### Detailed Description

Implementations of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of' means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be cylindrical, flat, cuboid or in another shape, which is not limited by the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box body for packaging one or more battery cells. The box body can prevent liquids or other foreign matters from affecting charging or discharging of the battery cells.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. A material of the separator may be polypropylene (PP) or polyethylene (PE). In addition, the electrode assembly may have a wound structure or a laminated structure, and the embodiments of the present application are not limited thereto.

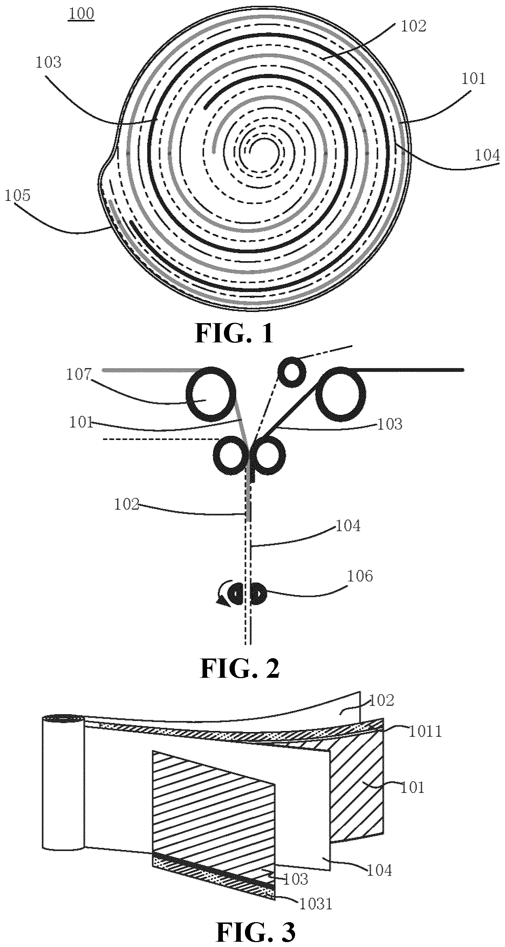

For an electrode assembly of a wound structure, the conventional manufacturing method usually has many disadvantages. Fig. 1 shows a schematic cross-sectional diagram of a conventional electrode assembly 100 of a wound structure, where a cylindrical electrode assembly 100 is taken as an example, and the cross-section is a cross-section perpendicular to an axial direction of the electrode assembly 100. Fig. 2 shows a schematic structural diagram of an apparatus for manufacturing the electrode assembly 100, and Fig. 3 is an exploded schematic structural diagram of the electrode assembly 100. As shown in Figs. 1 to 3, a conventional electrode assembly 100 includes a negative electrode plate 101, a first separator 102, a positive electrode plate 103, and a second separator 104. The first separator 102 and the second separator 104 are configured to isolate the positive electrode plate 103 from the negative electrode plate 101; and the positive electrode plate 103 is connected to a positive tab 1031, and the negative electrode plate 101 is connected to a negative tab 1011, and the positive tab 1031 and the negative tab 1011 here are respectively arranged at two ends of the electrode assembly 100 as an example, but this embodiment is not limited thereto. Optionally, the electrode assembly 100 may further include a finishing adhesive 105. The finishing adhesive 105 is the outermost layer of the electrode assembly 100, for protecting its internal components.

Specifically, as shown in Figs. 2 and 3, during manufacturing of the electrode assembly 100, before winding, the positive electrode plate assembly and the negative electrode plate assembly are cut first to obtain a predetermined length of the positive electrode plate 103 and the negative electrode plate 101. The cut positive electrode plate 103 and negative electrode plate 101, and the first separator 102 and the second separator 104 may be respectively arranged on a plurality of idler roller assemblies 107 for subsequent winding process. During winding, a winding needle 106 clamps a winding start end of the first separator 102 and a winding start end of the second separator 104. The winding start end of the first separator 102 and the winding start end of the second separator 104 are substantially aligned with each other, and after the winding needle 106 is initially wound, the cut positive electrode plate 103 and negative electrode plate 101 of a predetermined length are respectively caused to be wound by frictional force of the first separator 102 and the second separator 104, and the electrode assembly 100 is obtained after winding.

This manufacturing method requires the winding of the positive electrode plate 103 and the negative electrode plate 101 respectively caused by the frictional force of the first separator 102 and the second separator 104, so the initial winding speed and acceleration should not be too large, otherwise the winding efficiency will be affected. In addition, since the positive electrode plate 103 and the negative electrode plate 101 have no tension and are therefore in a free state after cutting, the positive electrode plate 103 and the negative electrode plate 101 are likely to have the problem of offset feeding, and a head of the positive electrode plate 103 and a head of the negative electrode plate 101 also have the problem of being easy to be hit during feeding, which leads to the problem of corner folding of the heads, resulting in great potential safety hazards and low manufacturing efficiency.

Therefore, an embodiment of the present application provides an electrode assembly, including a first electrode plate layer, a first separator, a second electrode plate layer and a second separator. The first separator and the second separator are configured to isolate the first electrode plate layer from the second electrode plate layer, the first electrode plate layer includes a first first insulating section and a first electrode plate connected to each other, and the end of the first insulating section away from the first electrode plate is a winding start end of the first electrode plate layer where the first electrode plate is located; the second electrode plate layer includes a second electrode plate having the polarity opposite to that of the first electrode plate; and the winding start end of the first electrode plate layer, a winding start end of the first separator and a winding start end of the second separator of the electrode assembly are substantially aligned with one another, and a winding start end of the second electrode plate layer is substantially aligned with the winding start end of the first electrode plate layer, or is located downstream of the winding start end of the first electrode plate layer. Therefore, compared with the conventional electrode assembly 100 shown in Figs. 1 to 3, when the electrode assembly of the embodiment of the present application is being initially wound, at least the first electrode plate layer may be initially wound synchronously with the first separator and the second separator, that is, the feeding of the first electrode plate layer where the first electrode plate is located will not be delayed due to not relying on frictional force, so that the problem of offset and corner folding of an initial winding head of the first electrode plate is avoided, thereby improving the manufacturing efficiency of the electrode assembly. Moreover, the first insulating section included in the first electrode plate layer can also increase the strength of the central area of the electrode assembly to avoid the collapse of the central area caused by insufficient strength of the central area. Especially, when the winding start ends of the first electrode plate layer and the second electrode plate layer are also substantially aligned with each other, the problems of offset and corner folding of the initial winding heads of both the first electrode plate and the second electrode plate can be avoided, and the feeding of each of the two electrode plate layers will not be delayed due to not relying on frictional force, so it is also possible to greatly increase the initial winding speed and acceleration of the electrode assembly, significantly shortening the manufacturing time, and further improving the manufacturing efficiency of the electrode assembly. Moreover, the first electrode plate layer and the second electrode plate layer added in the central area of the electrode assembly can greatly improve the strength of the central area, thereby avoiding the collapse of the central area.

The technical solutions described in the embodiments of the present application are applicable to various electrical devices using batteries.

The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for description.

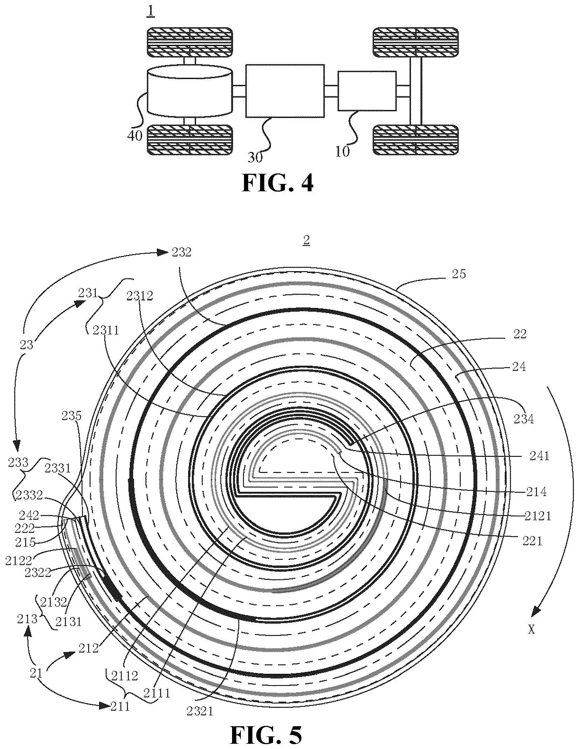

For example, a schematic structural diagram of a vehicle 1 according to an embodiment of the present application is shown in Fig. 4. The vehicle 1 may be a fuel vehicle, a gas vehicle or a new-energy vehicle. The new-energy vehicle may be an all-electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

The battery 10 may include a box body, and the inside of the box body is a hollow structure. The hollow structure may be configured to receive a plurality of battery cells. Depending on different power requirements, the number of battery cells in the battery 10 may be set to any value. A plurality of battery cells may be in series, parallel or series-parallel connection to achieve a larger capacity or power. Since there may be many battery cells included in each battery 10, the battery cells may be arranged in groups for convenience of installation, and each group of battery cells constitute a battery module. The number of battery cells included in the battery module is not limited, and may be set according to requirements, and these battery modules may be in series, parallel or series-parallel connection.

Optionally, the battery 10 may further include other structures, which will not be described in detail herein. For example, the battery 10 may further include a bus component. The bus component is configured to implement the electrical connection between the plurality of battery cells, such as parallel connection, series connection or series-parallel connection. Specifically, the bus component may implement the electrical connection between the battery cells by connecting electrode terminals of the battery cells. Further, the bus component may be fixed to the electrode terminals of the battery cells by welding. Electric energy of the plurality of battery cells may be further led out through an electrically conductive mechanism penetrating the box body.

The battery cell in the embodiments of the present application may include an outer shell and an inner electrode assembly. The shell may be of a hollow structure, which is configured to receive the electrode assembly. A battery cell may be provided with one or more electrode assemblies according to actual applications. The electrode assembly is a component of a battery cell where an electrochemical reaction occurs. The electrode assembly may be a cylinder, a cuboid, etc., and the shell of the battery cell may be correspondingly shaped according to the shape of the electrode assembly. The electrode assembly includes tabs and a main body connected to each other. The main body includes a positive electrode plate and a negative electrode plate, and the tabs of the electrode assembly may include a positive tab and a negative tab. Specifically, the main body may be formed by stacking or winding the positive electrode plate coated with a positive electrode active material layer and the negative electrode plate coated with a negative electrode active material layer; and the positive tab may be formed by stacking parts that protrude from the positive electrode plate and are not coated with the positive electrode active material layer, and the negative tab may be formed by stacking parts that protrude from the negative electrode plate and not coated with the negative electrode active material layer.

The battery cell is further provided with electrode terminals, which are configured for electrical connection with the electrode assembly to output electric energy from the battery cell. The electrode terminals may include a positive electrode terminal and a negative electrode terminal. The positive electrode terminal is configured for electrical connection with the positive tab, and the negative electrode terminal is configured for electrical connection with the negative tab. The positive electrode terminal may be connected directly or indirectly to the positive tab, and the negative electrode terminal may be connected directly or indirectly to the negative tab. Illustratively, the positive electrode terminal is electrically connected to the positive tab via a connecting member, and the negative electrode terminal is electrically connected to the negative tab via a connecting member.

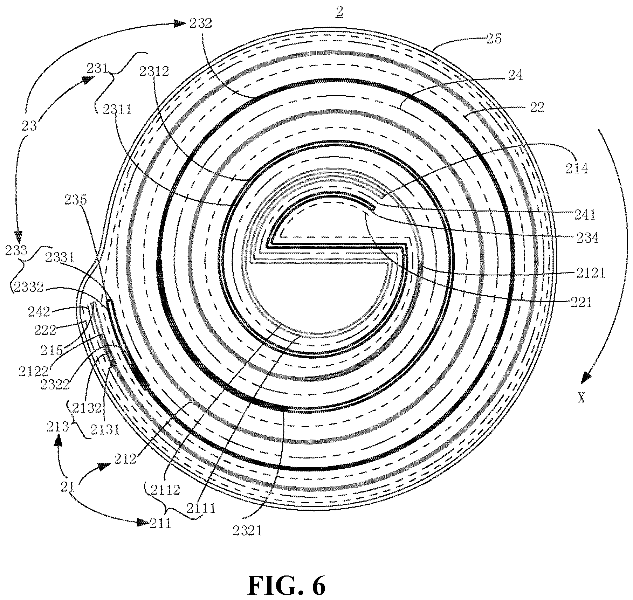

Fig. 5 shows a possible cross-sectional diagram of an electrode assembly 2 according to an embodiment of the present application, the electrode assembly 2 of the embodiment of the present application is illustrated by taking a cylindrical shape as an example, and the cross-section shown in Fig. 5 is a plane perpendicular to an axial direction of the electrode assembly 2. Similarly, Figs. 6 to 10 respectively show several other possible cross-sectional diagrams of an electrode assembly 2 according to embodiments of the present application, and the cross-sections in Figs. 5 to 10 are cross-sections in the same direction.

As shown in Figs. 5 to 10, the electrode assembly 2 according to the embodiment of the present application includes: a first electrode plate layer 21, a first separator 22, a second electrode plate layer 23 and a second separator 24. The first electrode plate layer 21, the first separator 22, the second electrode plate layer 23 and the second separator 24 are wound to form the electrode assembly 2. Specifically, the first separator 22 and the second separator 24 are configured to isolate the first electrode plate layer 21 from the second electrode plate layer 23, and a winding start end 214 of the first electrode plate layer 21, a winding start end 221 of the first separator 22 and a winding start end 241 of the second separator 24 are substantially aligned with one another; the first electrode plate layer 21 includes a first insulating section 211 and a first electrode plate 212 connected to each other, and the first insulating section 211 is arranged at the winding start end 2121 of the first electrode plate 212; the end of the first insulating section 211 away from the first electrode plate 212 is the winding start end 214 of the first electrode plate layer 21; the second electrode plate layer 23 includes a second electrode plate 232, and the polarity of the second electrode plate 232 is opposite to that of the first electrode plate 212; and along a winding direction X of the electrode assembly 2, a winding start end 234 of the second electrode plate layer 23 is substantially aligned with the winding start end 214 of the first electrode plate layer 21, or the winding start end 234 of the second electrode plate layer 23 is located downstream of the winding start end 214 of the first electrode plate layer 21.

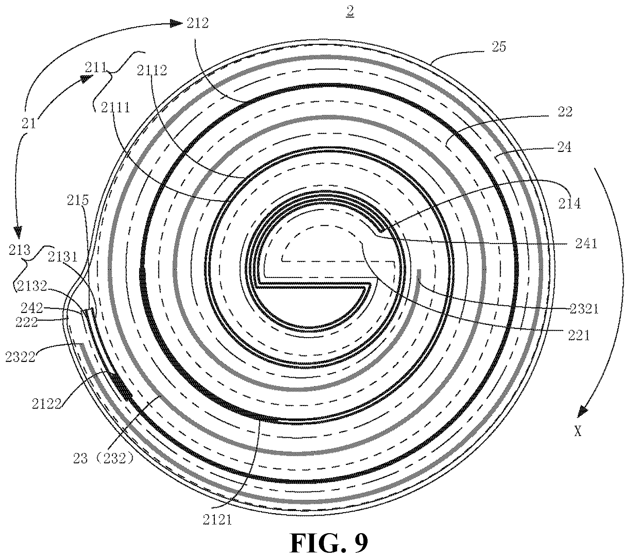

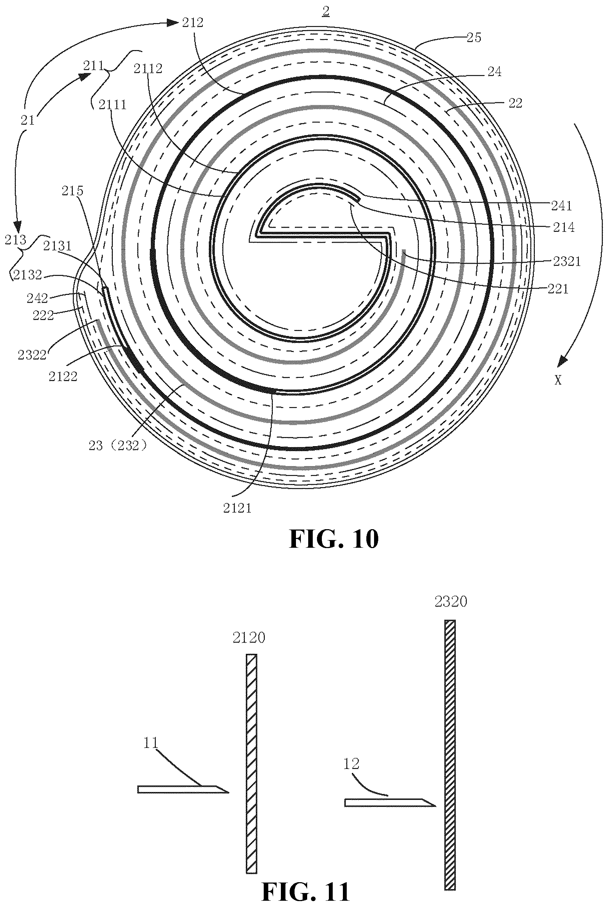

It should be understood that the polarities of the first electrode plate 212 and the second electrode plate 232 in the embodiment of the present application are opposite to each other, that is, when the first electrode plate 212 is a positive electrode plate, the second electrode plate 232 is a negative electrode plate, and when the first electrode plate 212 is a negative electrode plate, the second electrode plate 232 is a positive electrode plate. For example, in Figs. 5 to 8, the first electrode plate 212 is a negative electrode plate, and the second electrode plate 232 is a positive electrode plate; and in Figs. 9 and 10, the first electrode plate 212 is a positive electrode plate, and the second electrode plate 232 is a negative electrode plate. Moreover, for the convenience of description below, when the first electrode plate 212 or the second electrode plate 232 in an embodiment of the present application is a positive electrode plate, the first electrode plate 212 or the second electrode plate 232 refers to the part of the positive electrode plate other than the positive tab, the positive electrode plate is formed by coating the positive electrode active material layer on a surface of a positive electrode current collector, and the positive electrode current collector that is not coated with the positive electrode active material layer protrudes from the positive electrode current collector that has been coated with the positive electrode active material layer, the positive electrode current collector that is not coated with the positive electrode active material layer serves as the positive tab, and the positive electrode plate is connected to the positive tab. Similarly, when the first electrode plate 212 or the second electrode plate 232 in an embodiment of the present application is a negative electrode plate, the first electrode plate 212 or the second electrode plate 232 refers to the part of the negative electrode plate other than the negative tab, the negative electrode plate is formed by coating the negative electrode active material layer on a surface of a negative electrode current collector, and the negative electrode current collector that is not coated with the negative electrode active material layer protrudes from the negative electrode current collector that has been coated with the negative electrode active material layer, the negative electrode current collector that is not coated with the negative electrode active material layer serves as the negative tab, and the negative electrode plate is connected to the negative tab. For the sake of brevity, no further details will be given below.

The first separator 22 and the second separator 24 in the embodiment of the present application are both used to isolate the first electrode plate layer 21 from the second electrode plate layer 23, but the present application does not limit the arrangement positions and order of the first separator 22 and the second separator 24. Specifically, as shown in Figs. 5 to 10, at any position of the electrode assembly 2, the first separator 22 and/or the second separator 24 may be arranged between the first electrode plate layer 21 and the second electrode plate layer 23, so that at any position of the electrode assembly 2, the first electrode plate layer 21 and the second electrode plate layer 23 are not in direct contact with each other, so as to avoid short circuit.

It should be understood that, taking into account the influence of factors such as manufacturing errors, the "substantial alignment" of multiple winding start ends or multiple winding terminal ends in the embodiments of the present application is meant that the distance between the positions of multiple end points (e.g., end points of the multiple winding start ends, or end points of the multiple winding terminal ends) along the winding direction X of the electrode assembly 2 is less than or equal to a preset value. The preset value may be set to any value slightly greater than zero, in order to make the distance between the positions of the multiple end points along the winding direction X of the electrode assembly 2 approaches zero. For example, by the winding start end 214 of the first electrode plate layer 21, the winding start end 221 of the first separator 22 and the winding start end 241 of the second separator 24 being substantially aligned with one another, it is meant that the distance between the end points of every two winding start ends of the three winding start ends along the winding direction X of the electrode assembly 2 is less than or equal to a preset value, so that the distance between the end points of every two winding start ends of the three winding start ends along the winding direction X of the electrode assembly 2 is approximately equal to zero.

Comparing the electrode assembly 2 in the embodiment of the present application with the conventional electrode assembly 100 shown in Figs. 1 to 3, when the electrode assembly 2 of the embodiment of the present application is being initially wound, at least the first electrode plate layer 21 may be initially wound synchronously with the first separator 22 and the second separator 24, that is, the feeding of the first electrode plate layer 21 where the first electrode plate 212 is located will not be delayed due to not relying on frictional force, so that the problem of offset and corner folding of an initial winding head of the first electrode plate 212 is avoided, thereby improving the manufacturing efficiency of the electrode assembly 2. Moreover, the first insulating section 211 included in the first electrode plate layer 21 can also increase the strength of the central area of the electrode assembly 2 to avoid the collapse of the central area caused by insufficient strength of the central area. Especially, when the winding start ends of the first electrode plate layer 21 and the second electrode plate layer 23 are also substantially aligned with each other, the problems of offset and corner folding of the initial winding heads of both the first electrode plate 212 and the second electrode plate 232 can be avoided, and the feeding of each of the two electrode plate layers will not be delayed due to not relying on frictional force, so it is also possible to greatly increase the initial winding speed and acceleration of the electrode assembly 2, significantly shortening the manufacturing time, and further improving the manufacturing efficiency of the electrode assembly 2. Moreover, the first electrode plate layer 21 and the second electrode plate layer 23 added in the central area of the electrode assembly 2 can greatly improve the strength of the central area, thereby avoiding the collapse of the central area.

Optionally, as shown in Figs. 5 to 10, the first electrode plate layer 21 further includes a second insulating section 213 connected to the first electrode plate 212; the second insulating section 213 is arranged at a winding terminal end 2122 of the first electrode plate 212, and the end of the second insulating section 213 away from the first electrode plate 212 is a winding terminal end 215 of the first electrode plate layer 21; the winding terminal end 215 of the first electrode plate layer 21, a winding terminal end 222 of the first separator 22 and a winding terminal end 242 of the second separator 24 are substantially aligned with one another; and along the winding direction X of the electrode assembly 2, a winding terminal end 235 of the second electrode plate layer 23 is substantially aligned with the winding terminal end 215 of the first electrode plate layer 21, or the winding terminal end 235 of the second electrode plate layer 23 is located upstream of the winding terminal end 215 of the first electrode plate layer 21. Corresponding to the arrangement of the multiple winding start ends, in the embodiment of the present application, the winding terminal end 215 of the first electrode plate layer 21, the winding terminal end 222 of the first separator 22 and the winding terminal end 242 of the second separator 24 are also arranged to be substantially aligned with one another, so that it is possible to synchronously cut the first electrode plate layer 21, the first separator 22 and the second separator 24 during mass production of electrode assemblies 2, further improving the manufacturing efficiency. Moreover, the synchronous cutting of the terminal ends can also avoid the offset of the winding terminal end 215 of the first electrode plate layer 21, thereby improving the overall alignment of the electrode assembly 2, improving the ability to control a winding deviation correction process, and then increasing the energy density of the battery cell.

Different embodiments will be described in detail below with reference to the accompanying drawings.

Optionally, as an embodiment, the winding start end 234 of the second electrode plate layer 23 is substantially aligned with the winding start end 214 of the first electrode plate layer 21. As shown in Figs. 5 and 6, here the first electrode plate 212 is a negative electrode plate and the second electrode plate 232 is a positive electrode plate as an example, the difference between Figs. 5 and 6 lies in that the positions of the first electrode plate 212 and the second electrode plate 232 are different. The first electrode plate 212 is located outside the second electrode plate 232 in Fig. 5, whereas the first electrode plate 212 is located inside the second electrode plate 232 in Fig. 6, but the embodiments of the present application are not limited thereto.

It should be understood that, as shown in Figs. 5 and 6, due to the need for the electrode assembly 2 to be clamped by a winding needle during the winding process, an "S"-shaped area generally appears in the central area of the electrode assembly 2. As a result of the "S"-shaped area, the arrangement order of multiple layers of the electrode assembly 2 is reversed in the upper half and the lower half of the "S"-shaped area.

Taking Fig. 5 as an example, in the upper half of the "S"-shaped area, the electrode assembly 2 is provided with the first separator 22, the first electrode plate layer 21, the second separator 24 and the second electrode plate layer 23 arranged in sequence from the inside to the outside, but on the contrary, in the lower half of the "S"-shaped area, the electrode assembly is provided with the second electrode plate layer 23, the second separator 24, the first electrode plate layer 21 and the first separator 22 arranged in sequence from the inside to the outside. Since the lower half of the "S"-shaped area is connected to most of the other areas of the electrode assembly 2, and from the lower half of the "S"-shaped area to the winding terminal end of the electrode assembly 2, the arrangement order of the layers included in the electrode assembly 2 remains the same. Therefore, by "the first electrode plate 212 is located outside the second electrode plate 232" described in the embodiment of the present application, it is meant that from the lower half of the "S"-shaped area to the winding terminal end of the electrode assembly 2, the first electrode plate 212 is located outside the second electrode plate 232. For the sake of brevity, details will not be described below.

Similarly, taking Fig. 6 as an example, in the upper half of the "S"-shaped area, the electrode assembly 2 is provided with the first separator 22, the second electrode plate layer 23, the second separator 24 and the first electrode plate layer 21 arranged in sequence from the inside to the outside, but on the contrary, in the lower half of the "S"-shaped area, the electrode assembly is provided with the first electrode plate layer 21, the second separator 24, the second electrode plate layer 23 and the first separator 22 arranged in sequence from the inside to the outside. Since the lower half of the "S"-shaped area is connected to most of the other areas of the electrode assembly 2, and from the lower half of the "S"-shaped area to the winding terminal end of the electrode assembly 2, the arrangement order of the layers included in the electrode assembly 2 remains the same. Therefore, by "the first electrode plate 212 is located inside the second electrode plate 232" in the embodiment of the present application, it is meant that from the lower half of the "S"-shaped area to the winding terminal end of the electrode assembly 2, the first electrode plate 212 is located inside the second electrode plate 232. For the sake of brevity, details will not be described below.

As shown in Figs. 5 and 6, the second electrode plate layer 23 includes a third insulating section 231 connected to the second electrode plate 232; the third insulating section 231 is arranged at a winding start end 2321 of the second electrode plate 232; and the end of the third insulating section 231 away from the second electrode plate 232 is the winding start end 234 of the second electrode plate layer 23. In this way, by reasonably setting the length and position of the third insulating section 231, the winding start end 221 of the first separator 22, the winding start end 214 of the first electrode plate layer 21, the winding start end 241 of the second separator 24 and the winding start end 234 of the second electrode plate layer 23 of the electrode assembly 2 formed by winding can be substantially aligned with one another such that the first separator 22, the first electrode plate layer 21, the second separator 24 and the second electrode plate layer 23 are initially wound synchronously, avoiding the delayed feeding of the first electrode plate layer 21 and the second electrode plate layer 21 due to relying on frictional force, thereby avoiding the offset and corner folding of the initial winding heads of both the first electrode plate 212 and the second electrode plate 232, and it is also possible to greatly increase the initial winding speed and acceleration, significantly shortening the manufacturing time, improving the winding efficiency, reducing the cost of winding, and further improving the manufacturing efficiency of the electrode assembly 2. In addition, the first insulating section 211 of the first electrode plate layer 21 and the third insulating section 231 of the second electrode plate layer 23 added to the central area of the electrode assembly 2 can greatly increase the strength of the central area, thereby avoiding the collapse of the central area caused by insufficient strength of the central area.

Corresponding to each winding start end, as shown in Figs. 5 and 6, along the winding direction X of the electrode assembly 2, the winding terminal end 235 of the second electrode plate layer 23 is substantially aligned with the winding terminal end 215 of the first electrode plate layer 21. Specifically, the second electrode plate layer 23 further includes a fourth insulating section 233 connected to the second electrode plate 232; the fourth insulating section 233 is arranged at a winding terminal end 2322 of the second electrode plate 232, and the end of the fourth insulating section 233 away from the second electrode plate 232 is the winding terminal end 235 of the second electrode plate layer 23. In this way, by reasonably setting the length and position of the fourth insulating section 233, the winding terminal end 215 of the first electrode plate layer 21, the winding terminal end 222 of the first separator 22, the winding terminal end 235 of the second electrode plate layer 23 and the winding terminal end 242 of the second separator 24 of the electrode assembly 2 formed by winding can also be substantially aligned with one another, so that the first electrode plate layer 21, the first separator 22, the second electrode plate layer 23 and the second separator 24 can all be cut synchronously during mass production of electrode assemblies 2, further improving the manufacturing efficiency. Moreover, the synchronous cutting of the terminal ends can also avoid the offset of the winding terminal end 215 of the first electrode plate layer 21 and the winding terminal end 235 of the second electrode plate layer 23, thereby improving the end alignment of the first electrode plate layer 21 of the electrode assembly 2 and the end alignment of the second electrode plate layer 23, improving the ability to control the winding deviation correction process, and then increasing the energy density of the battery cell.

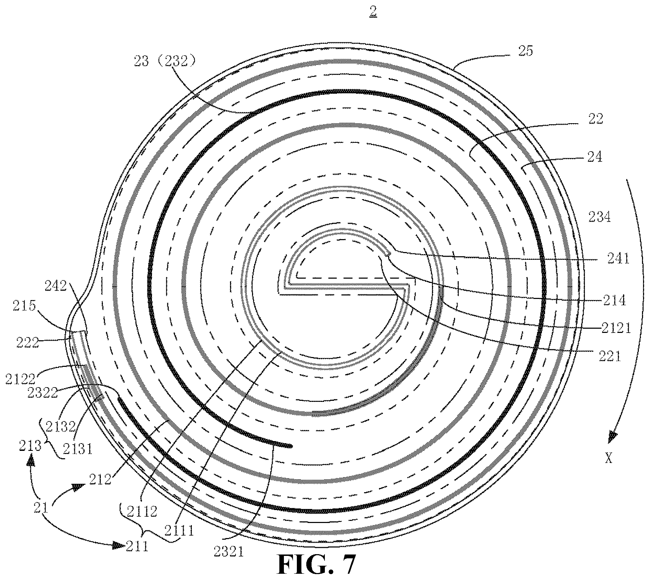

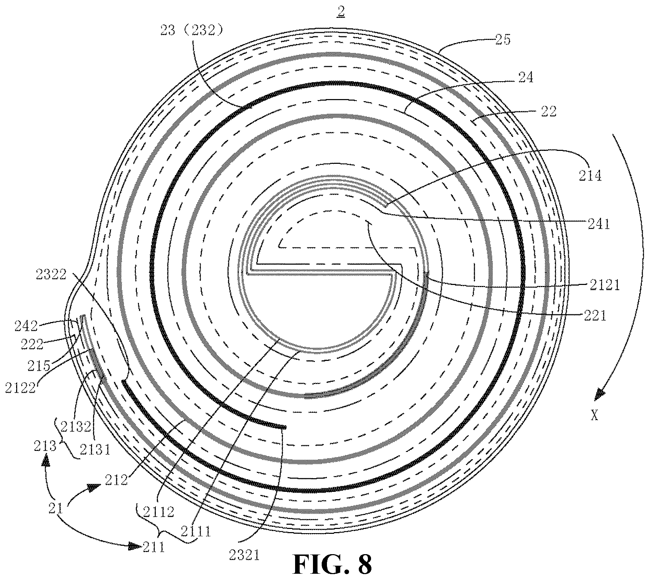

Optionally, as another embodiment, the winding start end 234 of the second electrode plate layer 23 may not be aligned with the winding start end 214 of the first electrode plate layer 21. For example, the winding start end 234 of the second electrode plate layer 23 is located downstream of the winding start end 214 of the first electrode plate layer 21, that is, along the winding direction X of the electrode assembly 2, the winding start end 234 of the second electrode plate layer 23 is behind the winding start end 214 of the first electrode plate layer 21 by a certain distance. Specifically, here taking Figs. 7 to 10 as an example, as shown in Figs. 7 and 8, here the first electrode plate 212 is a negative electrode plate and the second electrode plate 232 is a positive electrode plate as an example, the difference between Figs. 7 and 8 lies in that the positions of the first electrode plate 212 and the second electrode plate 232 are different. The first electrode plate 212 is located outside the second electrode plate 232 in Fig. 7, whereas the first electrode plate 212 is located inside the second electrode plate 232 in Fig. 8, but the embodiments of the present application are not limited thereto. Similarly, in Figs. 9 and 10, the first electrode plate 212 is a positive electrode plate and the second electrode plate 232 is a negative electrode plate as an example, the difference between Figs. 9 and 10 lies in that the positions of the first electrode plate 212 and the second electrode plate 232 are different. The first electrode plate 212 is located inside the second electrode plate 232 in Fig. 9, whereas the first electrode plate 212 is located outside the second electrode plate 232 in Fig. 10.

Optionally, as shown in Figs. 7 to 10, the second electrode plate layer 23 includes a second electrode plate 232, and a winding start end 2321 of the second electrode plate 232 is also the winding start end 234 of the second electrode plate layer 23. Compared with the conventional electrode assembly 100 shown in Figs. 1 to 3 in which both electrode plates are wound with delayed feeding due to relying on frictional force, in the electrode assembly 2 of the embodiment of the present application, the winding start end 214 of the first electrode plate layer 21 where the first electrode plate 212 is located, the winding start end 221 of the first separator 22 and the winding start end 241 of the second separator are substantially aligned with one another before being wound, only the feeding of the second electrode plate 232 is delayed due to relying on frictional force, so that the problem of offset and corner folding of the initial winding head of the first electrode plate 212 can be avoided, thereby improving the manufacturing efficiency of the electrode assembly 2.

Optionally, in the case where the winding start end 234 of the second electrode plate layer 23 is not aligned with the winding start end 214 of the first electrode plate layer 21, considering that the initial winding of the second electrode plate layer 23 needs to rely on frictional force, in order to increase the strength of the second electrode plate layer 23, different from the second electrode plate layer 23 shown in Figs. 7 to 10, the second electrode plate layer 23 may further include a third insulating section 231 connected to the second electrode plate 232; the third insulating section 231 is arranged at a winding start end 2321 of the second electrode plate 232; and the end of the third insulating section 231 away from the second electrode plate 232 is the winding start end 234 of the second electrode plate layer 23. Although the length of the third insulating section 231 cannot make the second electrode plate layer 23 and the first electrode plate layer 23 be initially wound synchronously, and the feeding and initial winding of the second electrode plate layer 23 still need to rely on the frictional force and are thus delayed, the third insulating section 231 can increase the strength of the winding start end 234 of the second electrode plate layer 23, alleviating the problem of offset and corner folding of the initial winding head of the second electrode plate layer 23.

Corresponding to each winding start end, as shown in Figs. 7 to 10, the winding terminal end 235 of the second electrode plate layer 23 may not be aligned with the winding terminal end 215 of the first electrode plate layer 21. For example, along the winding direction X of the electrode assembly 2, the winding terminal end 235 of the second electrode plate layer 23 is located upstream of the winding terminal end 215 of the first electrode plate layer 21, that is, along the winding direction X of the electrode assembly 2, the winding terminal end 235 of the second electrode plate layer 23 is located in front of the winding terminal end 215 of the first electrode plate layer 21. Specifically, the winding terminal end 2322 of the second electrode plate 232 may be the winding terminal end 235 of the second electrode plate layer 23, so that the second electrode plate 232 serves as the second electrode plate layer 23 and is initially wound by means of the frictional force. The first electrode plate layer 21 may be initially wound and ended synchronously with the two separators by means of the first insulating section 211 and the second insulating section 213, and can be cut synchronously during mass production of electrode assemblies 2, improving the manufacturing efficiency.

Optionally, in the case where the winding terminal end 235 of the second electrode plate layer 23 is not aligned with the winding terminal end 215 of the first electrode plate layer 21, in order to increase the strength of the terminal end of the second electrode plate layer 23, different from the second electrode plate layer 23 as shown in Figs. 7 to 10, the second electrode plate layer 23 further includes a fourth insulating section 233 connected to the second electrode plate 232; the fourth insulating section 233 is arranged at a winding terminal end 2322 of the second electrode plate 232, and the end of the fourth insulating section 233 away from the second electrode plate 232 is the winding terminal end 235 of the second electrode plate layer 23. The fourth insulating section 233 can increase the strength of the winding terminal end 235 of the second electrode plate layer 23, improving the performance of the electrode assembly 2.

It should be understood that the first insulating section 211, the second insulating section 213, the third insulating section 231 and the fourth insulating section 233 in the embodiments of the present application may be configured in various ways, and the embodiments of the present application are not limited thereto. For example, as shown in Figs. 5 to 10, for the first insulation 211, the first insulating section 211 includes a first insulating sublayer 2111 and a second insulating sublayer 2112 arranged opposite to each other, and the first insulating sublayer 2111 and the second insulating sublayer 2112 clamp at least a partial area of the winding start end 2121 of the first electrode plate 212 such that the first insulating section 211 is connected to the first electrode plate 212. By arranging the first insulating sublayer 2111 and the second insulating sublayer 2112 to clamp at least a partial area of the winding start end 2121 of the first electrode plate 212, the partial area of the winding start end 2121 of the first electrode plate 212 overlaps with a partial area of one end of the first insulating section 211, so that the connection strength between the first insulating section 211 and the first electrode plate 212 can be improved, ensuring the strength and stability of the electrode assembly 2.

Similarly, as shown in Figs. 5 to 10, for the second insulating section 213, the second insulating section 213 includes a third insulating sublayer 2131 and a fourth insulating sublayer 2132 arranged opposite to each other, and the third insulating sublayer 2131 and the fourth insulating sublayer 2132 clamp at least a partial area of the winding terminal end 2122 of the first electrode plate 212 such that the second insulating section 213 is connected to the first electrode plate 212. By arranging the third insulating sublayer 2131 and the fourth insulating sublayer 2132 to clamp at least a partial area of the winding terminal end 2122 of the first electrode plate 212, the partial area of the winding terminal end 2122 of the first electrode plate 212 overlaps with a partial area of one end of the second insulating section 213, so that the connection strength between the second insulating section 213 and the first electrode plate 212 can be improved, ensuring the strength and stability of the electrode assembly 2.

Similarly, as shown in Figs. 7 to 10, for the third insulating section 231, the third insulating section 231 includes a fifth insulating sublayer 2311 and a sixth insulating sublayer 2312 arranged opposite to each other, and the fifth insulating sublayer 2311 and the sixth insulating sublayer 2312 clamp at least a partial area of the winding start end 2321 of the second electrode plate 232 such that the third insulating section 231 is connected to the second electrode plate 232. By arranging the fifth insulating sublayer 2311 and the sixth insulating sublayer 2312 to clamp at least a partial area of the winding start end 2321 of the second electrode plate 232, the partial area of the winding start end 2321 of the second electrode plate 232 overlaps with a partial area of one end of the third insulating section 231, so that the connection strength between the third insulating section 231 and the second electrode plate 232 can be improved, ensuring the strength and stability of the electrode assembly 2.

Similarly, as shown in Figs. 7 to 10, for the fourth insulating section 233, the fourth insulating section 233 includes a seventh insulating sublayer 2331 and an eighth insulating sublayer 2332 arranged opposite to each other, and the seventh insulating sublayer 2331 and the eighth insulating sublayer 2332 clamp at least a partial area of the winding terminal end 2322 of the second electrode plate 232 such that the fourth insulating section 233 is connected to the second electrode plate 232. By arranging the seventh insulating sublayer 2331 and the eighth insulating sublayer 2332 to clamp at least a partial area of the winding terminal end 2322 of the second electrode plate 232, the partial area of the winding terminal end 2322 of the second electrode plate 232 overlaps with a partial area of one end of the fourth insulating section 233, so that the connection strength between the fourth insulating section 233 and the second electrode plate 232 can be improved, ensuring the strength and stability of the electrode assembly 2.

It should be understood that the length of the part of the first electrode plate 212 or the second electrode plate 232 that is clamped by each insulating sublayer described above in the embodiments of the present application may be set according to actual applications. For example, the longer the clamped part of the first electrode plate 212 or the second electrode plate 232, the greater the connection strength, which is more conducive to the stability of the electrode assembly 2, but too long clamped part will cause unnecessary waste and increase the cost of the first electrode plate 212 or the second electrode plate 232. Therefore, the length of the clamped part of the first electrode plate 212 or the second electrode plate 232 should be set reasonably.

It should be understood that, for each of the above embodiments shown in Figs. 5 to 10, in order to ensure the performance of the electrode assembly 2, the lengths of the parts included in the first electrode plate layer 21 and the second electrode plate layer 23 should be set reasonably. Specifically, considering that the arrangement of the first insulating section 211, the second insulating section 213, the third insulating section 231 and the fourth insulating section 233 will cover a partial area of the first electrode plate 212 or the second electrode plate 232, the length of each part should be set reasonably, so as to avoid lithium plating. For example, in the case where the first electrode plate 212 is a negative electrode plate and the second electrode plate 232 is a positive electrode plate, in order to avoid lithium plating in the electrode assembly 2, the dimensions in all directions of the part of the first electrode plate 212 that is not covered by the first insulating section 211 nor covered by the second insulating section 213 may be set to be greater than the corresponding dimensions of the part of the second electrode plate 232 that is not covered by the third insulating section 231 nor covered by the fourth insulating section 233, and the upstream end of the part of the first electrode plate 212 that is not covered by the first insulating section 211 nor covered by the second insulating section 213 is located upstream of the upstream end of the part of the second electrode plate 232 that is not covered by the third insulating section 231 nor covered by the fourth insulating section 233; and the downstream end of the part of the first electrode plate 212 that is not covered by the first insulating section 211 nor covered by the second insulating section 213 is located downstream of the downstream end of the second electrode plate 232 that is not covered by the third insulating section 231 nor covered by the fourth insulating section 233.

For example, taking Figs. 5 and 6 as an example, in the case where the winding start end 234 of the second electrode plate layer 23 is substantially aligned with the winding start end 214 of the first electrode plate layer 21, in the winding direction X of the electrode assembly 2, the length of the first insulating section 211 is less than that of the third insulating section 231, and the length of the first electrode plate 212 is greater than that of the second electrode plate 232, so that the upstream end of the first electrode plate 212 that is not covered by the first insulating section 211 but is close to the first insulating section 211 is located upstream of the end of the second electrode plate 232 that is not covered by the third insulating section 231 but is close to the third insulating section 231, that is, the end of the first electrode plate 212 that is not covered by the first insulating section 211 but is close to the first insulating section 211 corresponds to the third insulating section 231 of the second electrode plate layer 23, so as to avoid lithium plating.

In contrast, as shown in Figs. 7 and 8, when the second electrode plate layer 23 does not include the third insulating section 231, in the winding direction X of the electrode assembly 2, the length of the part of the first electrode plate 212 that does not cover the first insulating section 211 is greater than the length of the second electrode plate 232, and the upstream end of the first electrode plate 212 that is not covered by the first insulating section 211 but is close to the first insulating section 211 is located upstream of the corresponding end of the second electrode plate 232, that is, the winding start end 2321 of the second electrode plate 232 corresponds to the part of the first electrode plate 212 that is not covered by the first insulating section 211, so as to avoid lithium plating.

Similarly, as shown in Figs. 5 and 6, in the case where the winding terminal end 235 of the second electrode plate layer 23 is substantially aligned with the winding terminal end 215 of the first electrode plate layer 21, in the winding direction X of the electrode assembly 2, the length of the second insulating section 213 of the first electrode plate layer 21 is less than the length of the fourth insulating section 233, so that it is possible that the downstream end of the first electrode plate 212 that is not covered by the second insulating section 213 but is close to the second insulating section 213 is located downstream of the end of the second electrode plate 232 that is not covered by the fourth insulating section 233 but is close to the fourth insulating section 233, that is, the end of the first electrode plate 212 that is not covered by the second insulating section 213 but is close to the second insulating section 213 corresponds to the fourth insulating section 233 of the second electrode plate layer 23, so as to avoid lithium plating.

As shown in Figs. 7 and 8, when the second electrode plate layer 23 does not include the fourth insulating section 233, in the winding direction X of the electrode assembly 2, the length of the part of the first electrode plate 212 that does not cover the first insulating section 211 is greater than the length of the second electrode plate 232, and the downstream end of the first electrode plate 212 that is not covered by the second insulating section 213 but is close to the second insulating section 213 is located downstream of the corresponding end of the second electrode plate 232, that is, the winding terminal end 2322 of the second electrode plate 232 corresponds to the part of the first electrode plate 212 that is not covered by the second insulating section 213, so as to avoid lithium plating.

For another example, in a winding axis direction of the electrode assembly 2, the length of the first electrode plate 212 is greater than that of the second electrode plate 232, so as to avoid lithium plating. The winding axis direction of the electrode assembly 2 is perpendicular to the cross-sections shown in Figs. 5 to 10. Specifically, two ends of the first electrode plate 212 along the winding axis direction of the electrode assembly 2 should exceed the corresponding ends of the second electrode plate 232 along the winding axis direction of the electrode assembly 2. The exceeding distance at each end may be according to actual applications, and for example, may be set to 0.5 mm-2.5 mm, so as not to cause lithium plating due to too small exceeding distance, and also to avoid the problem of waste of cost caused by too large exceeding distance.

Optionally, contrary to the above case, in the case where the first electrode plate 212 is a positive electrode plate and the second electrode plate 232 is a negative electrode plate, in order to avoid lithium plating in the electrode assembly 2, the dimensions in all directions of the part of the first electrode plate 212 that is not covered by the first insulating section 211 nor covered by the second insulating section 213 may be set to be less than the corresponding dimensions of the part of the second electrode plate 232 that is not covered by the third insulating section 231 nor covered by the fourth insulating section 233. Moreover, the upstream end of the part of the first electrode plate 212 that is not covered by the first insulating section 211 nor covered by the second insulating section 213 is located downstream of the upstream end of the part of the second electrode plate 232 that is not covered by the third insulating section 231 nor covered by the fourth insulating section 233; and the downstream end of the part of the first electrode plate 212 that is not covered by the first insulating section 211 nor covered by the second insulating section 213 is located upstream of the downstream end of the second electrode plate 232 that is not covered by the third insulating section 231 nor covered by the fourth insulating section 233.

For example, taking the case where the winding start end 221 of the first separator 22, the winding start end 214 of the first electrode plate layer 21, the winding start end 241 of the second separator 24 and the winding start end 234 of the second electrode plate layer 23 are substantially aligned with one another as an example, in the winding direction X of the electrode assembly 2, the length of the first insulating section 211 is greater than that of the third insulating section 231, and the length of the first electrode plate 212 is less than that of the second electrode plate 232, so that the upstream end of the first electrode plate 212 that is not covered by the first insulating section 211 but is close to the first insulating section 211 is located downstream of the upstream end of the second electrode plate 232 that is not covered by the third insulating section 231 but is close to the third insulating section 231, that is, the end of the first electrode plate 212 that is not covered by the first insulating section 211 but is close to the first insulating section 211 corresponds to the second electrode plate 232, so as to avoid lithium plating.

In contrast, as shown in Figs. 9 and 10, when the second electrode plate layer 23 does not include the third insulating section 231, in the winding direction X of the electrode assembly 2, the length of the part of the first electrode plate 212 that does not cover the first insulating section 211 is less than the length of the second electrode plate 232, and the upstream end of the first electrode plate 212 that is not covered by the first insulating section 211 but is close to the first insulating section 211 is located downstream of the corresponding end of the second electrode plate 232, that is, the winding start end 2321 of the second electrode plate 232 corresponds to a part of the first insulating section 211 of the first electrode plate layer 21, so as to avoid lithium plating.

Similarly, for the winding terminal ends, in the case where the winding terminal end 222 of the first separator 22, the winding terminal end 215 of the first electrode plate layer 21, the winding terminal end 242 of the second separator 24 and the winding terminal end 235 of the second electrode plate layer 23 are substantially aligned with one another, in the winding direction X of the electrode assembly 2, the length of the second insulating section 213 of the first electrode plate layer 21 is greater than that of the fourth insulating section 233, so that it is possible that the downstream end of the first electrode plate 212 that is not covered by the second insulating section 213 but is close to the second insulating section 213 is located upstream of the downstream end of the second electrode plate 232 that is not covered by the fourth insulating section 233 but is close to the fourth insulating section 233, that is, the end of the first electrode plate 212 that is not covered by the second insulating section 213 but is close to the second insulating section 213 corresponds to the second electrode plate 232, so as to avoid lithium plating.

For another example, in the winding axis direction of the electrode assembly 2, the length of the first electrode plate 212 is less than that of the second electrode plate 232, so as to avoid lithium plating.

In contrast, as shown in Figs. 9 and 10, when the second electrode plate layer 23 does not include the fourth insulating section 233, in the winding direction X of the electrode assembly 2, the length of the part of the first electrode plate 212 that does not cover the first insulating section 211 is less than the length of the second electrode plate 232, and the downstream end of the first electrode plate 212 that is not covered by the second insulating section 213 but is close to the second insulating section 213 is located upstream of the corresponding end of the second electrode plate 232, that is, the winding terminal end 2322 of the second electrode plate 232 corresponds to a part of the second insulating section 213 of the first electrode plate layer 21, so as to avoid lithium plating.

Optionally, as shown in Figs. 5 to 10, the electrode assembly 2 further includes a finishing adhesive 25. The finishing adhesive 25 is configured to form an outer surface of the electrode assembly 2, that is, the finishing adhesive 25 is arranged at the outermost layer, can be used to protect the first electrode plate layer 21, the first separator 22, the second electrode plate layer 23 and the second separator 24 inside same, and can also be used to fix the electrode assembly 2 to avoid loosening, collapsing, etc. of the electrode assembly 2.

The manufacturing process of the electrode assembly 2 of the embodiments of the present application will be described in detail below with reference to the accompanying drawings. Considering the different embodiments described above, for the convenience of illustration, an example is mainly taken below for illustration in which the first electrode plate 212 is a negative electrode plate and the second electrode plate 232 is a positive electrode plate, and in which the first electrode plate layer 21 includes a first insulating section 211, a first electrode plate 212 and a second insulating section 213, and the second electrode plate layer 23 includes a third insulating section 231, a second electrode plate layer 232 and a fourth insulating section 233. Moreover, it is mainly aimed at the embodiments shown in Figs. 5 and 6, but the embodiments of the present application are not limited thereto, and related descriptions may also be applicable to other embodiments, and for the sake of brevity, details are not repeated here.

Firstly, the manufacturing of the first electrode plate layer 21 and the second electrode plate layer 22 in the embodiments of the present application will be described with reference to the accompanying drawings. Fig. 11 shows a schematic cross-sectional diagram, taken along the thickness direction, of a first electrode plate assembly 2120 and a second electrode plate assembly 2320 in an embodiment of the present application. As shown in Fig. 11, the first electrode plate assembly 2120 may be formed by coating a surface of a negative electrode current collector with a negative electrode active material layer, and the first electrode plate assembly 2120 may be configured to form a plurality of first electrode plates 212. Optionally, the first electrode plate assembly 2120 may also be configured to form negative tabs. For example, the negative electrode current collector of the first electrode plate assembly 2120 that is not coated with the negative electrode active material layer serves as the negative tab, and the negative electrode current collector that is not coated with the negative electrode active material layer protrudes from the negative electrode current collector that has been coated with the negative electrode active material layer. Moreover, the second electrode plate assembly 2320 may be formed by coating a surface of a positive electrode current collector with a positive electrode active material layer, and the second electrode plate assembly 2320 may be configured to form a plurality of second electrode plates 232. Optionally, the second electrode plate assembly 2320 may also be configured to form positive tabs. For example, the positive electrode current collector of the second electrode plate assembly 2320 that is not coated with the positive electrode active material layer serves as a positive tab, and the positive electrode current collector that is not coated with the positive electrode active material layer protrudes from the positive electrode current collector that has been coated with the positive electrode active material layer.

It should be understood that the dimensions of the first electrode plate assembly 2120 and the second electrode plate assembly 2320 in the embodiments of the present application may be set according to actual applications. For example, after the manufacturing of the electrode assembly 2 is completed, the widths of the first electrode plate assembly 2120 and the second electrode plate assembly 2320 are equal to the winding axial length of the manufactured electrode assembly 2, and therefore may be set according to the actual requirements of the electrode assembly 2; and the lengths of the first electrode plate assembly 2120 and the second electrode plate assembly 2320 may be set according to the requirements of mass production, and, for example, may be determined according to the number of first electrode plates 212 and the number of second electrode plates 232 that need to be manufactured from the first electrode plate assembly 2120 and the second electrode plate assembly 2320 respectively. The embodiments of the present application are not limited thereto.

In the embodiments of the present application, the manufacturing process may include: performing a first cutting on the first electrode plate assembly 2120, to obtain a first cut end and a second cut end at the cut position, the second cut end being the winding start end 2121 of the first electrode plate 212; and separating the first cut end from the second cut end by a first preset distance, and pasting the first insulating member 2110 therebetween such that opposite ends of the first insulating member 2110 are respectively connected to the first cut end and the second cut end to obtain the first electrode plate layer assembly 210.

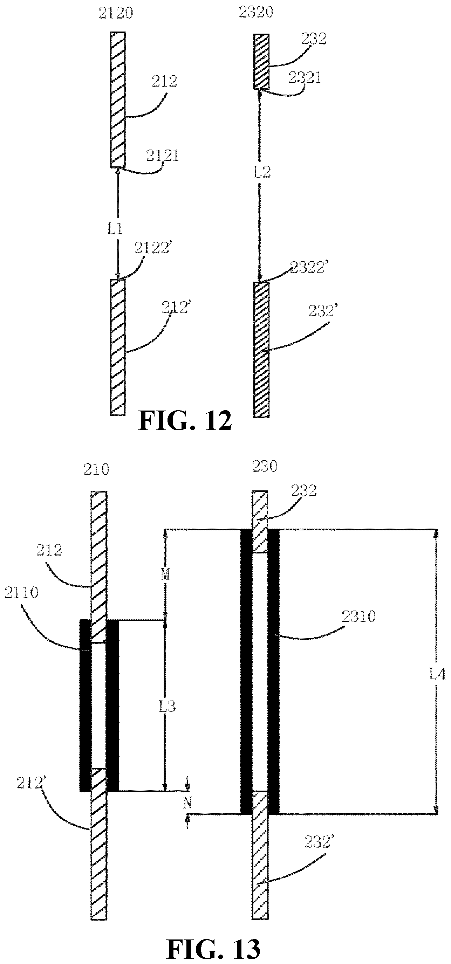

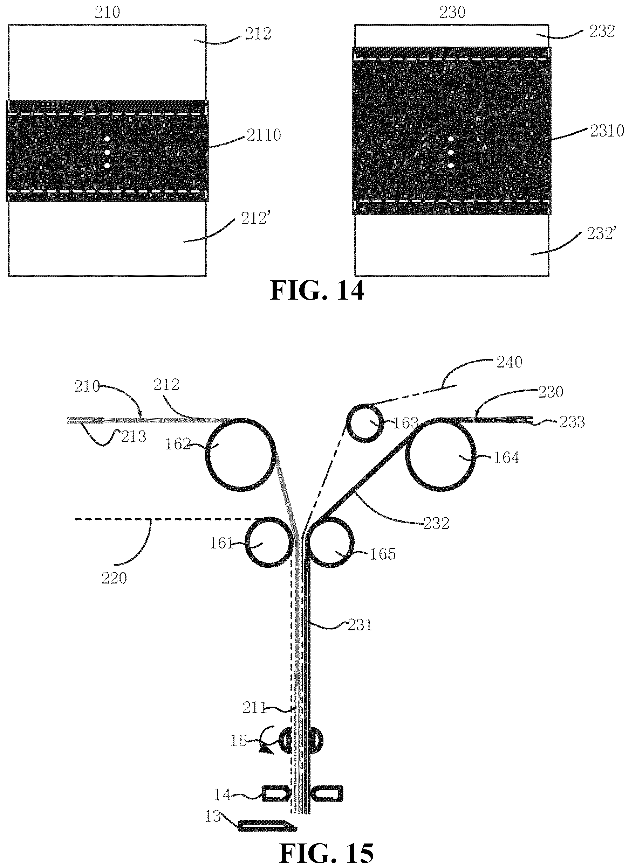

Specifically, Fig. 12 shows another schematic cross-sectional diagram, taken along the thickness direction, of a first electrode plate assembly 2120 and a second electrode plate assembly 2320 in an embodiment of the present application, Fig. 13 shows a schematic cross-sectional diagram, taken along the thickness direction, of a first electrode plate layer assembly 210 and a second electrode plate layer assembly 230 in an embodiment of the present application, and Fig. 14 shows a schematic diagram of any one of surfaces of a first electrode plate layer assembly 210 and a second electrode plate layer assembly 230 in an embodiment of the present application. Figs. 13 and 14 show the same position of the first electrode plate layer assembly 210, and also show the same position of the second electrode plate layer assembly 230. As shown in Figs. 11 to 14, a first electrode plate cutter 11 may be used to cut the first electrode plate assembly 2120, that is, the first cutting of the first electrode plate assembly 2120 may be performed by the first electrode plate cutter 11. By "first" here may refer to any cutting among multiple cuttings of the first electrode plate assembly 2120 during mass production. The cut first electrode plate assembly 2120 has a first cut end 2122' and a second cut end 2121 at the cut position. The second cut end 2121 may be used as a winding start end 2121 of a first electrode plate 212 of the electrode assembly 2 to be manufactured later, and the first cut end 2122' may be used as a winding terminal end 2122' of a first electrode plate 212' of another electrode assembly to be manufactured.

As shown in Figs. 11 to 14, the first cut end 2122' is separated from the second cut end 2121 by a first preset distance L1, which first preset distance L1 may be set according to actual applications. For example, considering that the first preset distance L1 is related to the length of the first insulating section 211 of the first electrode plate layer 21 and also to the length of the second insulating section of another first electrode plate layer, and during mass production, the dimensions of the parts of the plurality of first electrode plate layers included in the plurality of electrode assemblies are generally set to be the same, the first preset distance L1 thus should satisfy the minimum distance required under the condition that no lithium plating occurs between the negative electrode plate and the positive electrode plate.

As shown in Figs. 11 to 14, for the first preset distance L 1, the first insulating member 2110 is pasted such that the opposite ends of the first insulating member 2110 are respectively connected to the first cut end 2122' and the second cut end 2121. In this way, the first electrode plate assembly 2120 that was originally cut is reconnected via the first insulating member 2110, thereby obtaining the first electrode plate layer assembly 210, and the first insulating member 2110 may be used to form the first insulating section 211. Optionally, the first insulating member 2110 may include insulating adhesive pasted on the two surfaces of the cut first electrode plate assembly 2120 respectively, that is, the first insulating member 2110 includes two layers of insulating adhesive, and the first electrode plate layer assembly 210 is formed by means of double-sided pasting of insulating adhesive, so as to ensure the strength of the first electrode plate layer assembly 210.

When cutting the first electrode plate assembly 2120, the first cut end 2122' and the second cut end 2121 may have the problem of powder removal due to cutting of the coated area, and there may also be a problem of burrs caused by cutting. If no first insulating member 2110 is provided and the cut end is directly wound to form the electrode assembly 2, it is likely to cause lithium plating or short circuit due to the burrs piercing the separators. Therefore, by means of the pasted first insulating member 2110, it is possible to avoid situations such as powder removal caused by cutting of the coated area and burr short circuit caused by cutout burrs, thereby improving the safety of the electrode assembly 2.

Similar to the above process, the process of manufacturing the electrode assembly 2 may further include: performing a second cutting on the first electrode plate assembly 2120, to obtain a third cut end and a fourth cut end at the cut position, the third cut end being the winding terminal end 2122 of the first electrode plate 212; separating the third cut end from the fourth cut end by the same first preset distance, and pasting the second insulating member 2130 therebetween such that opposite ends of the second insulating member 2130 are respectively connected to the third cut end and the fourth cut end to obtain the first electrode plate layer assembly 210.

Specifically, the "second" cutting refers to the next cutting after the first cutting, the part of the first electrode plate assembly 2120 between the two consecutive cuttings is the first electrode plate 212, and the second insulating member 2130 is connected to the winding terminal end 2122 of the first electrode plate 212 and may be used to form the second insulating section 213.

In addition, similar to the first insulating member 2110, the second insulating member 2130 can also avoid situations such as powder removal caused by cutting of the coated area and burr short circuit caused by cutout burrs when cutting the first electrode plate assembly 2120, thereby improving the safety of the electrode assembly 2.

It should be understood that the above processes of arranging the first insulating member 2110 and the second insulating member 2130 are performed multiple times in sequence to manufacture the first electrode plate assembly 2120 into the first electrode plate layer assembly 210, so that a plurality of first electrode plate layers 21 can be formed by cutting the first insulating member 2110 and the second insulating member 2130 of the first electrode plate layer assembly 210.

Optionally, for the second electrode plate assembly 2320, the manufacturing process may include: performing a first cutting on the second electrode plate assembly 2320, to obtain a fifth cut end and a sixth cut end at the cut position, the sixth cut end being the winding start end 2321 of the second electrode plate 232; separating the fifth cut end from the sixth cut end by a second preset distance, and pasting the third insulating member 2310 therebetween such that opposite ends of the third insulating member 2310 are respectively connected to the fifth cut end and the sixth cut end to obtain the second electrode plate layer assembly 230.

Specifically, as shown in Figs. 11 to 14, a second electrode plate cutter 12 can be used to cut the second electrode plate assembly 2320, that is, the first cutting of the second electrode plate assembly 2320 may be performed by the second electrode plate cutter 12. By "first" here may refer to any cutting among multiple cuttings of the second electrode plate assembly 2320 during mass production. The cut second electrode plate assembly 2320 has a fifth cut end 2322' and a sixth cut end 2321 at the cut position. The sixth cut end 2321 may be used as a winding start end 2321 of a first electrode plate 212 of the electrode assembly 2 to be manufactured later, and the fifth cut end 2322' may be used as a winding terminal end 2322' of a second electrode plate 232' of another electrode assembly to be manufactured.

As shown in Figs. 11 to 14, the fifth cut end 2322' is separated from the sixth cut end 2321 by a second preset distance L2, which second preset distance L2 may be set according to actual applications. For example, considering that the second preset distance L2 is related to the length of the third insulating section 231 of the second electrode plate layer 23 and also to the length of the fourth insulating section of another second electrode plate layer, and during mass production of electrode assemblies, the dimensions of the parts of the plurality of second electrode plate layers included in the plurality of electrode assemblies are generally set to be the same, the second preset distance L2 thus should satisfy the minimum distance required under the condition that no lithium plating occurs between the negative electrode plate and the positive electrode plate, and the second preset distance L2 is greater than the first preset distance L1.

As shown in Figs. 11 to 14, for the second preset distance L2, the third insulating member 2310 is pasted such that the opposite ends of the third insulating member 2310 are respectively connected to the fifth cut end 2322' and the sixth cut end 2321. In this way, the second electrode plate assembly 2320 that was originally cut is reconnected via the third insulating member 2310, thereby obtaining the second electrode plate layer assembly 230, and the third insulating member 2310 may be used to form the third insulating section 231. Optionally, the third insulating member 2310 may include insulating adhesive pasted on the two surfaces of the cut second electrode plate assembly 2320 respectively, that is, the third insulating member 2310 includes two layers of insulating adhesive, and the second electrode plate layer assembly 230 is formed by means of double-sided pasting of insulating adhesive, so as to ensure the strength of the second electrode plate layer assembly 230.

It should be understood that, similar to the first insulating member 2110, the third insulating member 2310 can avoid situations such as powder removal caused by cutting of the coated area and burr short circuit caused by cutout burrs when cutting the second electrode plate assembly 2320, thereby improving the safety of the electrode assembly 2.

Similar to the above process, the process of manufacturing the electrode assembly 2 may further include: performing a second cutting on the second electrode plate assembly 2320, to obtain a seventh cut end and an eighth cut end at the cut position, the seventh cut end being the winding terminal end 2322 of the second electrode plate 232; separating the seventh cut end from the eighth cut end by the second preset distance, and pasting the fourth insulating member 2330 therebetween such that opposite ends of the fourth insulating member 2330 are respectively connected to the seventh cut end and the eighth cut end to obtain the second electrode plate layer assembly 230.

Specifically, the "second" cutting of the second electrode plate assembly 2320 refers to the next cutting after the first cutting, the part of the second electrode plate assembly 2320 between the two consecutive cuttings is the second electrode plate 232, and the fourth insulating member 2330 is connected to the winding terminal end 2322 of the second electrode plate 232 and may be used to form the fourth insulating section 233.

In addition, similar to the first insulating member 2110, the fourth insulating member 2330 can also avoid situations such as powder removal caused by cutting of the coated area and burr short circuit caused by cutout burrs when cutting the second electrode plate assembly 2320, thereby improving the safety of the electrode assembly 2.

It should be understood that the above processes of arranging the third insulating member 2310 and the fourth insulating member 2330 are performed multiple times in sequence to manufacture the second electrode plate assembly 2320 into the second electrode plate layer assembly 230, so that a plurality of second electrode plate layers 23 can be formed by cutting the third insulating member 2310 and the fourth insulating member 2330 of the second electrode plate layer assembly 230.

As shown in Figs. 13 and 14, the length of the first insulating member 2110 is L3, the length of the third insulating member 2310 is L4, L3 is less than L4, and the specific values of L3 and L4 may be set according to actual applications, and, for example, generally set to L4-L3 > 3 mm, so that the first insulating section 211 formed by the first insulating member 2110 and the third insulating section 213 formed by the third insulating member 2310 meet the requirements of the electrode assembly 2, so as to avoid lithium plating. If the first electrode plate layer assembly 210 and the second electrode plate layer assembly 230 are arranged according to the positions shown in Fig. 13 and are then synchronously cut to obtain the first electrode plate layer 21 and the second electrode plate layer 23, the distance M between the first electrode plate 212 and the second electrode plate 232 in Fig. 13 corresponds to the distance between the end of the first electrode plate 212 of the wound electrode assembly 2 that is not covered by the first insulating section 211 but is close to the first insulating section 211 and the end of the second electrode plate 232 that is not covered by the third insulating section 231 but is close to the third insulating section 231 in the winding direction X of the electrode assembly 2. Similarly, for another electrode assembly, the distance N between the first electrode plate 212' and the second electrode plate 232' in Fig. 13 corresponds to the distance between the end of the first electrode plate 212' of the wound electrode assembly that is not covered by the second insulating section but is close to the second insulating section and the end of the second electrode plate 232' that is not covered by the fourth insulating section but is close to the fourth insulating section in the winding direction of the electrode assembly.

Optionally, as shown in Fig. 14, the first insulating member 2110 and the third insulating member 2310 of the embodiment of the present application may be provided with a plurality of through holes, and the shape of the plurality of through holes may be circular, rectangular or any other shape, so that at least one of the first insulating section 211, the second insulating section 213, the third insulating section 231 and the fourth insulating section 233 of the manufactured electrode assembly 2 is provided with a plurality of through holes, so as to ensure the infiltration effect of the electrode assembly 2 in the battery cell, facilitating the uniform infiltration of an electrolyte solution, thereby ensuring the performance and the service life of the battery cell.

The processes of manufacturing the first electrode plate layer assembly 210 and the second electrode plate layer assembly 230 have been described above, and the process of forming the electrode assembly 2 by winding will be described in detail below with reference to the accompanying drawings. Specifically, the process of manufacturing the electrode assembly 2 may include: providing a first electrode plate layer assembly 210, a first separator assembly 220, a second electrode plate layer assembly 230 and a second separator assembly 240, wherein the first electrode plate layer assembly 210 includes a first insulating member 2110 and a first electrode plate 212 connected to each other, and one end of the first insulating member 2110 is connected to a winding start end 2121 of the first electrode plate 212; and the second electrode plate layer assembly 230 includes a second electrode plate 232, and the polarity of the second electrode plate 232 is opposite to that of the first electrode plate 212; performing a first cutting on the first electrode plate layer assembly 210, the first separator assembly 220 and the second separator assembly 240 at the first insulating member 2110, and performing a first cutting on the second electrode plate layer assembly 230, to obtain a first electrode plate layer 21, a first separator 22, a second electrode plate layer 23 and a second separator 24, wherein the first separator 22 and the second separator 24 are configured to isolate the first electrode plate layer 21 from the second electrode plate layer 23, a part of the cut first insulating member 2110 forms a first insulating section 211 connected to the first electrode plate 212, the first electrode plate layer 21 includes the first insulating section 211 and the first electrode plate 212, and the end of the first insulating section 211 away from the first electrode plate 212 is a winding start end 214 of the first electrode plate layer 21; and winding the first electrode plate layer 21, the first separator 22, the second electrode plate layer 23 and the second separator 24 to form the electrode assembly, wherein the winding start end 214 of the first electrode plate layer 21, a winding start end 221 of the first separator 22 and a winding start end 241 of the second separator 24 are substantially flush with one another; and along a winding direction X of the electrode assembly 2, a winding start end 234 of the second electrode plate layer 23 is substantially aligned with the winding start end 214 of the first electrode plate layer 21, or the winding start end 234 of the second electrode plate layer 23 is located downstream of the winding start end 214 of the first electrode plate layer 21.

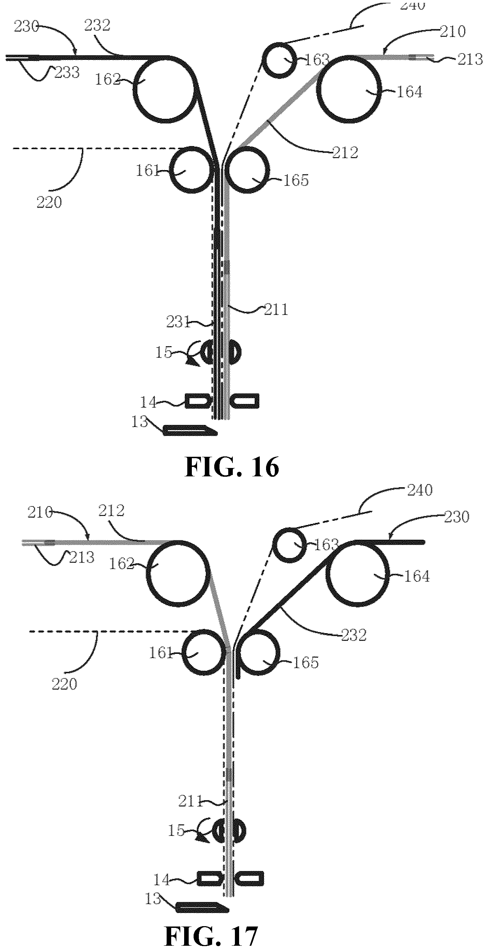

Specifically, Fig. 15 shows a schematic diagram of an apparatus for winding an electrode assembly 2 according to an embodiment of the present application. The electrode assembly 2 formed by winding in Fig. 15 may be the electrode assembly 2 shown in Fig. 5. Similarly, Figs. 16 to 20 respectively show schematic diagrams of several other possible apparatuses for winding an electrode assembly 2 according to embodiments of the present application. The electrode assemblies 2 formed by winding in Figs. 16 to 20 may be respectively the electrode assemblies 2 shown in Figs. 6 to 10.

Specifically, as shown in Figs. 15 to 20, the "first" cutting here may refer to any cutting in the process of manufacturing and winding several electrode assemblies 2, through which first cutting the winding of the electrode assembly 2 can be started. Moreover, the first cutting may be performed by the cutter 13 on the first electrode plate layer assembly 210, the first separator assembly 220 and the second separator assembly 240 at the first insulating member 2110, and because of different start positions of the second electrode plate layers 23 in different embodiments, the first cutting may be performed synchronously or asynchronously on the second electrode plate layer assembly 230, and the winding start end 214 of the first electrode plate layer 21, the winding start end 221 of the first separator 22, the winding start end 234 of the second electrode plate layer 23 and the winding start end 241 of the second separator 24 are then obtained at the cut position.

Optionally, the part of the cut first insulating member 2110 that is not connected to the first electrode plate layer 21 is configured to form a winding terminal end of a first electrode plate layer of an electrode assembly in the previous procedure; and correspondingly, the corresponding end formed by cutting the first separator assembly 220 and the winding terminal end of the first electrode plate layer of the electrode assembly in the previous procedure is a winding terminal end of a first separator of the electrode assembly in the previous procedure, and the corresponding end formed by cutting the second separator assembly 240 and the winding terminal end of the first electrode plate layer of the electrode assembly in the previous procedure is a winding terminal end of a second separator of the electrode assembly in the previous procedure.

Opposite the winding start end obtained by the first cutting, the first electrode plate layer 21 assembly further includes a second insulating member 2130, and one end of the second insulating member 2130 is connected to a winding terminal end 2122 of the first electrode plate 212; and the manufacturing process may further include: performing a second cutting on the first electrode plate layer assembly 210, the first separator assembly 220 and the second separator assembly 240 at the second insulating member 2130, and performing a second cutting on the second electrode plate layer assembly 230, to obtain a winding terminal end 215 of the first electrode plate layer 21, a winding terminal end 222 of the first separator 22, a winding terminal end 235 of the second electrode plate layer 23 and a winding terminal end 242 of the second separator 24 at the cut position, a part of the cut second insulating member 2130 forms a second insulating section 213 connected to the first electrode plate 212, the first electrode plate layer 21 further includes the second insulating section 213, and the end of the second insulating section 213 away from the first electrode plate 212 is the winding terminal end 215 of the first electrode plate layer 21; the winding terminal end 215 of the first electrode plate layer 21, the winding terminal end 222 of the first separator 22 and the winding terminal end 242 of the second separator 24 are substantially aligned with one another; and along the winding direction X of the electrode assembly 2, the winding terminal end 235 of the second electrode plate layer 23 is substantially aligned with the winding terminal end 215 of the first electrode plate layer 21, or the winding terminal end 235 of the second electrode plate layer 23 is located upstream of the winding terminal end 215 of the first electrode plate layer 21.

Specifically, as shown in Figs. 15 to 20, the "second" cutting here may refer to the next cutting after the first cutting, the first cutting and the second cutting are two successive cuttings, and the winding of the electrode assembly 2 may be ended through this second cutting. Moreover, the second cutting may be performed by the cutter 13 on the first electrode plate layer assembly 210, the first separator assembly 220 and the second separator assembly 240 at the second insulating member 2130, and because of different terminal positions of the second electrode plate layers 23 in different embodiments, the second cutting may be performed synchronously or asynchronously on the second electrode plate layer assembly 230, and the winding terminal end 215 of the first electrode plate layer 21, the winding terminal end 222 of the first separator 22, the winding terminal end 235 of the second electrode plate layer 23 and the winding terminal end 242 of the second separator 24 are then obtained at the cut position.

Optionally, the part of the cut second insulating member 2130 that is not connected to the first electrode plate 212 is configured to form a winding start end of a first electrode plate layer of an electrode assembly in the next procedure; and correspondingly, the corresponding end formed by cutting the first separator assembly 220 and the winding start end of the first electrode plate layer of the electrode assembly in the next procedure is a winding start end of a first separator of the electrode assembly in the next procedure, and the corresponding end formed by cutting the second separator assembly 240 and the winding start end of the first electrode plate layer of the electrode assembly in the next procedure is a winding start end of a second separator of the electrode assembly in the next procedure.

Details will be described below in conjunction with different embodiments of the second electrode plate layer 23.

Optionally, as an embodiment, as shown in Figs. 15 and 16, the second electrode plate layer assembly 230 may include a third insulating member 2310 connected to the second electrode plate 232, and one end of the third insulating member 2310 is arranged at a winding start end 2321 of the second electrode plate 232; and the step of performing a first cutting on the first electrode plate layer assembly 210, the first separator assembly 220 and the second separator assembly 240 at the first insulating member 2110, and performing a first cutting on the second electrode plate layer assembly 230 then may include: performing a first cutting on the second electrode plate layer assembly 230 at the third insulating member 2310 while performing a first cutting on the first electrode plate layer assembly 210, the first separator assembly 220 and the second separator assembly 240 at the first insulating member 2110, wherein a part of the cut third insulating member 2310 forms a third insulating section 231 connected to the second electrode plate 232, the second electrode plate layer 23 includes the third insulating section 231 and the second electrode plate 232, and the end of the third insulating section 231 away from the second electrode plate 232 is the winding start end 234 of the second electrode plate layer 23; and along the winding direction X of the electrode assembly 2, the winding start end 234 of the second electrode plate layer 23 is substantially aligned with the winding start end 214 of the first electrode plate layer 21.

Specifically, as shown in Figs. 15 and 16, the first electrode plate layer assembly 210, the first separator assembly 220, the second electrode plate layer assembly 230 and the second separator assembly 240 are clamped by nip rollers 14, and the first electrode plate layer assembly 210, the first separator assembly 220, the second electrode plate layer assembly 230 and the second separator assembly 240 are simultaneously cut by the cutter 13. The cut position is located at both the first insulating member 2110 and the third insulating member 2310. After cutting, the winding start end 214 of the first electrode plate layer 21, the winding start end 221 of the first separator 22, the winding start end 234 of the second electrode plate layer 23 and the winding start end 242 of the second separator 24 can be obtained at the cut position; and the winding start end 214 of the first electrode plate layer 21, the winding start end 221 of the first separator 22, the winding start end 234 of the second electrode plate layer 23 and the winding start end 241 of the second separator 24 are clamped by the winding needle 15 and are rotated together to form the electrode assembly 2 by winding.

The first electrode plate layer assembly 210, the first separator assembly 220, the second electrode plate layer assembly 230 and the second separator assembly 240 are simultaneously cut by the cutter 13, so that the winding start end 214 of the first electrode plate layer 21, the winding start end 221 of the first separator 22, the winding start end 234 of the second electrode plate layer 23 and the winding start end 241 of the second separator 24 are substantially flush with one another, and then clamped and rotated by the winding needle 15, that is, before and after cutting, the first electrode plate layer assembly 210, the first separator assembly 220, the second electrode plate layer assembly 230 and the second separator assembly 240 are always in a state of tension, so as to avoid the problem of offset and wrinkling of the heads. It is possible to avoid the problem of offset of the heads during initial winding, thereby avoiding lithium plating, and to avoid the of corner folding caused by hitting the winding needle during delayed feeding, and also to greatly increase the initial winding speed and acceleration, significantly shortening the manufacturing time, improving the winding efficiency, reducing the cost of winding, and further improving the manufacturing efficiency of the electrode assembly 2, compared with the delayed feeding of the positive electrode plate 103 and the negative electrode plate 101 of the conventional electrode assembly 100 relying on frictional force. In addition, the first insulating section 211 of the first electrode plate layer 21 and the third insulating section 231 of the second electrode plate layer 23 added to the central area of the electrode assembly 2 can greatly increase the strength of the central area, thereby avoiding the collapse of the central area caused by insufficient strength of the central area.

Optionally, after the first cutting, the part of the cut first insulating member 2110 that is not connected to the first electrode plate layer 21 is configured to form a winding terminal end of a first electrode plate layer of an electrode assembly in the previous procedure; and correspondingly, the part of the cut third insulating member 2310 that is not connected to the second electrode plate 232 is configured to form a winding terminal end of a second electrode plate layer of the electrode assembly 2 in the previous procedure, while the end of the cut first separator assembly 220 corresponding to the part of the cut first insulating member 2110 that is not connected to the first electrode plate layer 21 is a winding terminal end of a first separator of the electrode assembly in the previous procedure, and the end of the cut second separator assembly 240 corresponding to the part of the cut first insulating member 2110 that is not connected to the first electrode plate layer 21 is a winding terminal end of a second separator of the electrode assembly in the previous procedure.

Optionally, as shown in Figs. 15 and 16, during the process of manufacturing and winding the electrode assembly 2, a plurality of idler roller assemblies may be used to improve the winding efficiency. For example, as shown in Figs. 15 and 16, five idler roller assemblies 161-165 may be used, in which the first idler roller assembly 161 may be configured to arrange the first separator assembly 220, the second idler roller assembly 162 may be configured to arrange the first electrode plate layer assembly 210, the third idler roller assembly 163 may be configured to arrange the second separator assembly 240, the fourth idler roller assembly 164 may be configured to arrange the second electrode plate layer assembly 230, and the fifth idler roller assembly 165 may be configured to cooperate with the first idler roller assembly 161 to clamp the first separator assembly 220, the first electrode plate layer assembly 210, the second separator assembly 240 and the second electrode plate layer assembly 230, but the embodiments of the present application are not limited thereto.

It should be understood that the difference between Figs. 15 and 16 lies in that the arrangement positions of the first separator assembly 220, the first electrode plate layer assembly 210, the second separator assembly 240 and the second electrode plate layer assembly 230 are different. That is, in Fig. 15, from the inside to the outside along a winding radial direction, there are the second electrode plate layer assembly 230, the second separator assembly 240, the first electrode plate layer assembly 210, and the first separator assembly 220 in sequence. The second electrode plate layer assembly 230 is located on the inner side of the first electrode plate layer assembly 210, so that the motor assembly 2 shown in Fig. 5 can be formed. In Fig. 16, from the inside to the outside along the winding radial direction, there are the first electrode plate layer assembly 210, the second separator assembly 240, the second electrode plate layer assembly 230, and the first separator assembly 220 in sequence. The second electrode plate layer assembly 230 is located on the outer side of the first electrode plate layer assembly 210, so that the electrode assembly 2 shown in Fig. 6 can be formed. In this way, different electrode assemblies 2 can be formed with the same rotation direction of the winding needle 15.

As shown in Figs. 15 and 16, the second electrode plate layer assembly 230 further includes a fourth insulating member 2330, and one end of the fourth insulating member 2330 is connected to a winding terminal end 2322 of the second electrode plate 232. After the winding of the electrode assembly 2 is completed, a second cutting is required. Specifically, the step of performing a second cutting on the first electrode plate layer assembly 210, the first separator assembly 220 and the second separator assembly 240 at the second insulating member 2130, and performing a second cutting on the second electrode plate layer assembly 230 may include: performing a second cutting on the second electrode plate layer assembly 230 at the fourth insulating member 2330 while performing a second cutting on the first electrode plate layer assembly 210, the first separator assembly 220 and the second separator assembly 240 at the second insulating member 2130, wherein a part of the cut fourth insulating member 2330 forms a fourth insulating section 233 connected to the second electrode plate 232, the second electrode plate layer 23 further includes the fourth insulating section 233, and the end of the fourth insulating section 233 away from the second electrode plate 232 is the winding terminal end 235 of the second electrode plate layer 23; and along the winding direction X of the electrode assembly 2, the winding terminal end 235 of the second electrode plate layer 23 is substantially aligned with the winding terminal end 215 of the first electrode plate layer 21.

As shown in Figs. 15 and 16, the second cutting of the electrode assembly 2 may be completed by the cutter 13, and the cut position is located at both the second insulating member 2130 and the fourth insulating member 2330. The winding terminal end 215 of the first electrode plate layer 21, the winding terminal end 222 of the first separator 22, the winding terminal end 235 of the second electrode plate layer 23 and the winding terminal end 242 of the second separator 24 may be obtained at the cut position after cutting, to complete the winding of the electrode assembly 2, and the electrode assembly 2 as shown in Figs. 5 and 6 can be obtained correspondingly. The synchronous cutting of the terminal ends can also avoid the offset of the winding terminal end 215 of the first electrode plate layer 21 and the winding terminal end 235 of the second electrode plate layer 23, thereby improving the end alignment of the first electrode plate layer 21 of the electrode assembly 2 and the end alignment of the second electrode plate layer 23, improving the ability to control the winding deviation correction process, and then increasing the energy density of the battery cell.

Optionally, after the second cutting, the part of the cut second insulating member 2130 that is not connected to the first electrode plate 212 is configured to form a winding start end of a first electrode plate layer of an electrode assembly in the next procedure; and correspondingly, the part of the cut fourth insulating member 2330 that is not connected to the second electrode plate 232 is configured to form a winding start end of a second electrode plate layer of the electrode assembly in the next procedure, while the end of the cut first separator assembly 220 corresponding to the part of the cut fourth insulating member 2330 that is not connected to the second electrode plate 232 is a winding start end of a first separator of the electrode assembly in the next procedure, and the end of the cut second separator assembly 240 corresponding to the part of the cut fourth insulating member 2330 that is not connected to the second electrode plate 232 is a winding start end of a second separator of the electrode assembly in the next procedure. In this way, after the winding of the current electrode assembly 2 is completed, the first and second cuttings on the first electrode plate layer assembly 210, the first separator assembly 220, the second electrode plate layer assembly 230 and the second separator assembly 240 can be repeated, that is, the winding of the electrode assembly in the next procedure can be continued, and so on, so as to carry out the mass production of electrode assemblies. When the mass production of electrode assemblies 2 is carried out by means of the above method, since the initial winding speed and acceleration can be greatly increased, the manufacturing time can be significantly shortened. Taking an electrode assembly 2 with a negative electrode plate having a length of 6300 mm as an example, the number of electrode assemblies 2 produced by a single machine per minute can be increased from 5.5 to 7.5, significantly increasing the winding efficiency by 36%, compared with the conventional manufacturing method.

The embodiments in which the first electrode plate layer assembly 210 and the second electrode plate layer assembly 230 are wound synchronously are described in Figs. 15 and 16. As shown in Figs. 17 to 20, the first electrode plate layer assembly 210 and the second electrode plate layer assembly 230 may also not be cut synchronously.

Specifically, as shown in Figs. 17 to 20, the first cutting of the first electrode plate layer assembly 210, the first separator assembly 220 and the second separator assembly 240 at the first insulating member 2110, and the first cutting of the second electrode plate layer assembly 230 are completed by two cuttings, then along the winding direction X of the electrode assembly 2, the winding start end 234 of the second electrode plate layer 23 is located downstream of the winding start end 214 of the first electrode plate layer 21. Specifically, the first cutting of the first electrode plate layer assembly 210, the first separator assembly 220 and the second separator assembly 240 at the first insulating member 2110 can enable the three layers to be substantially aligned with one another, but the second electrode plate layer assembly 230 is not aligned with the three layers. Here, taking the second electrode plate layer assembly 230 without the third insulating member 2310 and the fourth insulating member 2330 as an example, the first cutting of the second electrode plate layer assembly 230 can obtain the start end of the second electrode plate 232 as the winding start end 234 of the second electrode plate layer 23, and the feeding of the second electrode plate layer 23 is delayed due to relying on frictional force.

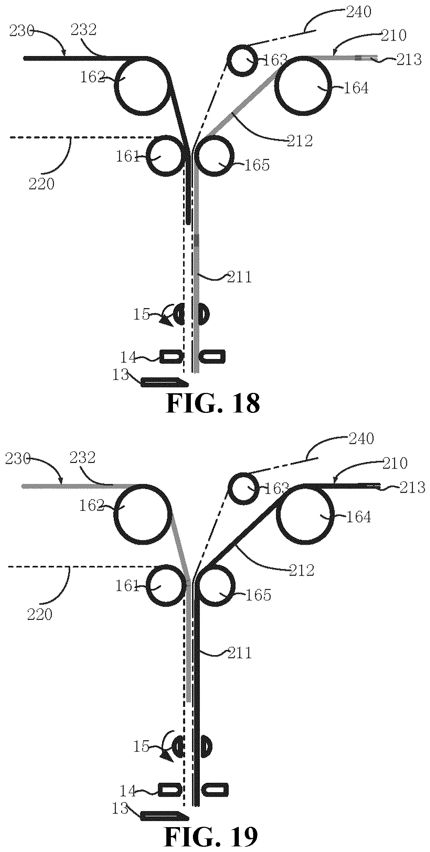

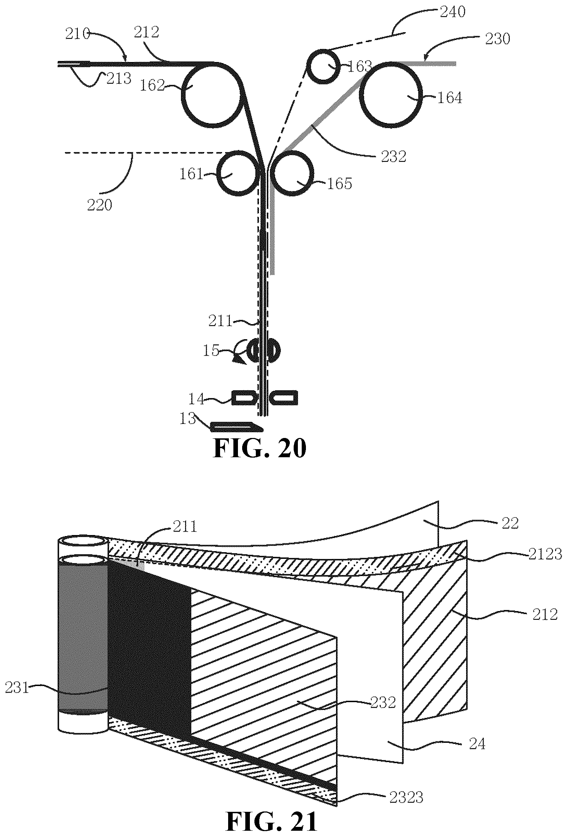

For the winding terminal ends corresponding to the winding start ends, as shown in Figs. 17 to 20, the second cutting of the first electrode plate layer assembly 210, the first separator assembly 220 and the second separator assembly 240 at the second insulating member 2130, and the second cutting of the second electrode plate layer assembly 230 are completed by two cuttings, then along the winding direction X of the electrode assembly 2, the winding terminal end 235 of the second electrode plate layer 23 is located upstream of the winding terminal end 215 of the first electrode plate layer 21. Specifically, after the first cutting of the second electrode plate layer assembly 230, the second electrode plate layer assembly 230 is cut again to obtain the winding terminal end 235 of the second electrode plate layer 23. Here, taking a second electrode plate layer assembly 230 without the fourth insulating member 2330 as an example, the second cutting of the second electrode plate layer assembly 230 can obtain the terminal end of the second electrode plate 232 as the winding terminal end 235 of the second electrode plate layer 23. Thereafter, the first electrode plate layer assembly 210, the first separator assembly 220 and the second separator assembly 240 continue to be wound, and a second cutting is performed on the first electrode plate layer assembly 210, the first separator assembly 220 and the second separator assembly 240 at the second insulating member 2130, so as to obtain the winding terminal end 215 of the first electrode plate layer 21, the winding terminal end 222 of the first separator 22 and the winding terminal end 242 of the second separator 24. The three winding terminal ends are substantially aligned with one another, and correspondingly, the electrode assemblies 2 as shown in Figs. 7 to 10 can be respectively obtained. Specifically, the solution of Fig. 17 obtains the electrode assembly 2 of Fig. 7. The solution of Fig. 18 obtains the electrode assembly of Fig. 8. The solution of Fig. 19 obtains the electrode assembly of Fig. 9. The solution of Fig. 20 obtains the electrode assembly 2 of Fig. 10.

It should be understood that a plurality of first insulating members 2110 and a plurality of second insulating members 2130 included in the first electrode plate layer assembly 210 of the embodiments of the present application may be made of the same insulating material to facilitate manufacturing. In this case, the first insulating section 211 and the second insulating section 213 of the first electrode plate layer 21 are also of the same material. Similarly, a plurality of third insulating members 2310 and a plurality of fourth insulating members 2330 included in the second electrode plate layer assembly 230 may also be made of the same insulating material to facilitate manufacturing. In this case, the third insulating section 231 and the fourth insulating section 2322 of the second electrode plate layer 23 are also of the same material. Moreover, the insulating materials of the first insulating section 211 and the third insulating section 231 in the embodiments of the present application may also be the same or may be different. The insulating material described above may be flexibly selected according to actual applications, and the insulating material can prevent the passage of ions from an electrolyte, so as to avoid lithium plating and short circuit.

It should be understood that the first insulating section 211 and/or the third insulating section 231 of the embodiments of the present application are located in the central area of the electrode assembly 2 and may be used to support the central area of the electrode assembly 2 to increase the strength of the central area of the electrode assembly 2, to prevent the collapse of the central area. Especially, during the cycle use of the battery 10, the electrode assembly 2 may expand and generate stress on the central area. If the strength of the central region is insufficient, the center of the central region will collapse, leading to safety problems such as lithium plating. Therefore, the first insulating section 211 and/or the third insulating section 231 of the embodiments of the present application may be configured to be of a thicker insulating material to increase the strength of the central area. For example, the first insulating section 211 may include a first insulating sublayer 2111 and a second insulating sublayer 2112, and the third insulating section 231 may include a fifth insulating sublayer 2311 and a sixth insulating sublayer 2312. The thickness of each insulating sublayer may be set to 30-100 µm, which can increase the thickness of the central area of the electrode assembly 2, and also prevent the volume of the electrode assembly 2 from being too large due to the excessive thickness, so as to ensure the energy density of the battery cell.

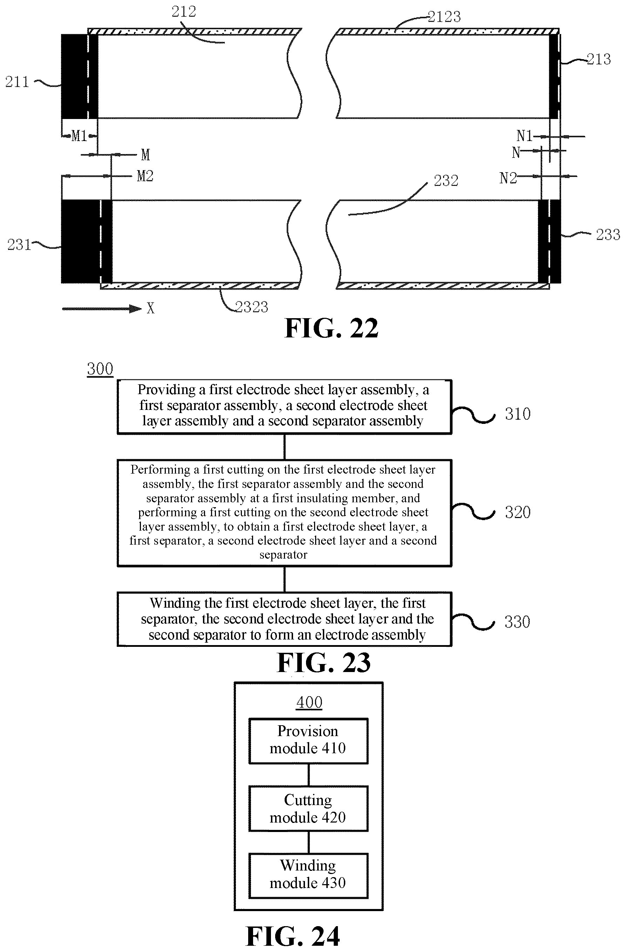

Fig. 21 shows a partial exploded schematic structural diagram of an electrode assembly 2 in an embodiment of the present application, and Fig. 22 shows a schematic diagram of a deployed first electrode plate layer 21 and second electrode plate layer 23 of an electrode assembly 2 in an embodiment of the present application. The electrode assembly 2 in Figs. 21 and 22 may be the electrode assembly 2 formed in Figs. 15 and 16, or the electrode assembly 2 shown in Figs. 5 and 6. As shown in Figs. 21 and 22, during winding of the electrode assembly 2, the winding start end 214 of the first electrode plate layer 21 is substantially aligned with the winding start end 234 of the second electrode plate layer 23; and the length M2 of the third insulating section 231 along the winding direction X of the electrode assembly 2 exceeds the length M1 of the first insulating section 211 along the winding direction X of the electrode assembly 2 by a distance of M, where M is greater than zero to prevent lithium plating. Similarly, the length N2 of the fourth insulating section 233 along the winding direction X of the electrode assembly 2 exceeds the length N1 of the third insulating section 213 along the winding direction X of the electrode assembly 2 by a distance of N, where N is greater than zero to prevent lithium plating.

As shown in Figs. 21 and 22, the first electrode plate layer 21 further includes a first tab 2123. For example, when the first electrode plate 212 included in the first electrode plate layer 21 is a negative electrode plate, the first tab 2123 is a negative tab. Correspondingly, the second electrode plate layer 23 further includes a second tab 2323. For example, when the second electrode plate 232 included in the second electrode plate layer 23 is a positive electrode plate, the second tab 2323 is a positive tab. In addition, the first insulating section 211 and the second insulating section 213 do not cover the first tab 2123, and the third insulating section 231 and the fourth insulating section 233 also do not cover the second tab 2323, so as not to affect the first tab 2123 and the second tab 2323. In the embodiments of the present application, the first tab 2123 and the second tab 2323 are respectively located at two ends of the electrode assembly 2, but the embodiments of the present application are not limited thereto.

The electrode assembly 2 according to the embodiments of the present application are described above, and a method and device for preparing an electrode assembly 2 according to the embodiments of the present application will be described below. For the parts not described in detail, reference can be made to the foregoing embodiments.

Fig. 23 shows a schematic flow chart of a method 300 for preparing an electrode assembly 2 according to an embodiment of the present application. As shown in Fig. 23, the method 300 may include: S310, providing a first electrode plate layer assembly 210, a first separator assembly 220, a second electrode plate layer assembly 230 and a second separator assembly 240, wherein the first electrode plate layer assembly 210 includes a first insulating member 2110 and a first electrode plate 212 connected to each other, and one end of the first insulating member 2110 is connected to a winding start end 2121 of the first electrode plate 212; and the second electrode plate layer assembly 230 includes a second electrode plate 232, and the polarity of the second electrode plate 232 is opposite to that of the first electrode plate 212; S320, performing a first cutting on the first electrode plate layer assembly 210, the first separator assembly 220 and the second separator assembly 240 at the first insulating member 2110, and performing a first cutting on the second electrode plate layer assembly 230, to obtain a first electrode plate layer 21, a first separator 22, a second electrode plate layer 23 and a second separator 24, wherein the first separator 22 and the second separator 24 are configured to isolate the first electrode plate layer 21 from the second electrode plate layer 23, a part of the cut first insulating member 2110 forms a first insulating section 211 connected to the first electrode plate 212, the first electrode plate layer 21 includes the first insulating section 211 and the first electrode plate 212, and the end of the first insulating section 211 away from the first electrode plate 212 is a winding start end 214 of the first electrode plate layer 21; and S330, winding the first electrode plate layer 21, the first separator 22, the second electrode plate layer 23 and the second separator 24 to form the electrode assembly, wherein the winding start end 214 of the first electrode plate layer 21, a winding start end 221 of the first separator 22 and a winding start end 241 of the second separator 24 are substantially flush with one another; and along a winding direction of the electrode assembly, a winding start end 234 of the second electrode plate layer 23 is substantially aligned with the winding start end 214 of the first electrode plate layer 21, or the winding start end 234 of the second electrode plate layer 23 is located downstream of the winding start end 214 of the first electrode plate layer 21.

In some embodiments, the method 300 further includes: performing a first cutting on the first electrode plate assembly 2120, to obtain a first cut end and a second cut end at the cut position, the second cut end being the winding start end 2121 of the first electrode plate 212; and separating the first cut end from the second cut end by a first preset distance, and pasting the first insulating member 2110 therebetween such that opposite ends of the first insulating member 2110 are respectively connected to the first cut end and the second cut end to obtain the first electrode plate layer assembly 210.

In some embodiments, the second electrode plate layer assembly 230 includes a third insulating member 2310 connected to the second electrode plate 232, and one end of the third insulating member 2310 is arranged at a winding start end 2321 of the second electrode plate 232; and the step of performing a first cutting on the first electrode plate layer assembly 210, the first separator assembly 220 and the second separator assembly 240 at the first insulating member 2110, and performing a first cutting on the second electrode plate layer assembly 230 includes: performing a first cutting on the second electrode plate layer assembly 230 at the third insulating member 2310 while performing a first cutting on the first electrode plate layer assembly 210, the first separator assembly 220 and the second separator assembly 240 at the first insulating member 2110, wherein a part of the cut third insulating member 2310 forms a third insulating section 231 connected to the second electrode plate 232, the second electrode plate layer 23 includes the third insulating section 231 and the second electrode plate 232, and the end of the third insulating section 231 away from the second electrode plate 232 is the winding start end 234 of the second electrode plate layer 23; and along the winding direction of the electrode assembly, the winding start end 234 of the second electrode plate layer 23 is substantially aligned with the winding start end 214 of the first electrode plate layer 21.

In some embodiments, the method 300 further includes: performing a first cutting on the second electrode plate assembly 2320, to obtain a fifth cut end and a sixth cut end at the cut position, the sixth cut end being the winding start end 2321 of the second electrode plate 232; separating the fifth cut end from the sixth cut end by a second preset distance, and pasting the third insulating member 2310 therebetween such that opposite ends of the third insulating member 2310 are respectively connected to the fifth cut end and the sixth cut end to obtain the second electrode plate layer assembly 230.

In some embodiments, the part of the cut third insulating member 2310 that is not connected to the second electrode plate 232 is configured to form a winding terminal end of a second electrode plate layer of an electrode assembly in the previous procedure.

In some embodiments, the first cutting of the first electrode plate layer assembly 210, the first separator assembly 220 and the second separator assembly 240 at the first insulating member 2110, and the first cutting of the second electrode plate layer assembly 230 are completed by two cuttings, along the winding direction of the electrode assembly, the winding start end 234 of the second electrode plate layer 23 is located downstream of the winding start end 214 of the first electrode plate layer 21.

In some embodiments, the part of the cut first insulating member 2110 that is not connected to the first electrode plate layer 21 is configured to form a winding terminal end of a first electrode plate layer of the electrode assembly in the previous procedure.

In some embodiments, the first electrode plate layer 21 assembly further includes a second insulating member 2130, and one end of the second insulating member 2130 is connected to a winding terminal end 2122 of the first electrode plate 212; and the method 300 further includes: performing a second cutting on the first electrode plate layer assembly 210, the first separator assembly 220 and the second separator assembly 240 at the second insulating member 2130, and performing a second cutting on the second electrode plate layer assembly 230, to obtain a winding terminal end 215 of the first electrode plate layer 21, a winding terminal end 222 of the first separator 22, a winding terminal end 235 of the second electrode plate layer 23 and a winding terminal end 242 of the second separator 24 at the cut position, a part of the cut second insulating member 2130 forms a second insulating section 213 connected to the first electrode plate 212, the first electrode plate layer 21 further includes the second insulating section 213, and the end of the second insulating section 213 away from the first electrode plate 212 is the winding terminal end 215 of the first electrode plate layer 21; the winding terminal end 215 of the first electrode plate layer 21, the winding terminal end 222 of the first separator 22 and the winding terminal end 242 of the second separator 24 are substantially aligned with one another; and along the winding direction of the electrode assembly, the winding terminal end 235 of the second electrode plate layer 23 is substantially aligned with the winding terminal end 215 of the first electrode plate layer 21, or the winding terminal end 235 of the second electrode plate layer 23 is located upstream of the winding terminal end 215 of the first electrode plate layer 21.

In some embodiments, the method 300 further includes: performing a second cutting on the first electrode plate assembly 2120, to obtain a third cut end and a fourth cut end at the cut position, the third cut end being the winding terminal end 2122 of the first electrode plate 212; separating the third cut end from the fourth cut end by the first preset distance, and pasting the second insulating member 2130 therebetween such that opposite ends of the second insulating member 2130 are respectively connected to the third cut end and the fourth cut end to obtain the first electrode plate layer assembly 210.

In some embodiments, the second electrode plate layer assembly 230 further includes a fourth insulating member 2330, and the end of the fourth insulating member 2330 is connected to the winding terminal end 2322 of the second electrode plate 232; and the step of performing a second cutting on the first electrode plate layer assembly 210, the first separator assembly 220 and the second separator assembly 240 at the second insulating member 2130, and performing a second cutting on the second electrode plate layer assembly 230 includes: performing a second cutting on the second electrode plate layer assembly 230 at the fourth insulating member 2330 while performing a second cutting on the first electrode plate layer assembly 210, the first separator assembly 220 and the second separator assembly 240 at the second insulating member 2130, wherein a part of the cut fourth insulating member 2330 forms a fourth insulating section 233 connected to the second electrode plate 232, the second electrode plate layer 23 further includes the fourth insulating section 233, and the end of the fourth insulating section 233 away from the second electrode plate 232 is the winding terminal end 235 of the second electrode plate layer 23; and along the winding direction of the electrode assembly, the winding terminal end 235 of the second electrode plate layer 23 is substantially aligned with the winding terminal end 215 of the first electrode plate layer 21.

In some embodiments, the method 300 further includes: performing a second cutting on the second electrode plate assembly 2320, to obtain a seventh cut end and an eighth cut end at the cut position, the seventh cut end being the winding terminal end 2322 of the second electrode plate 232; separating the seventh cut end from the eighth cut end by the second preset distance, and pasting the fourth insulating member 2330 therebetween such that opposite ends of the fourth insulating member 2330 are respectively connected to the seventh cut end and the eighth cut end to obtain the second electrode plate layer assembly 230.

In some embodiments, the part of the cut fourth insulating member 2330 that is not connected to the second electrode plate 232 is configured to form a winding start end of a second electrode plate layer of an electrode assembly in the next procedure.

In some embodiments, the second cutting of the first electrode plate layer assembly 210, the first separator assembly 220 and the second separator assembly 240 at the second insulating member 2130, and the second cutting of the second electrode plate layer assembly 230 are completed by two cuttings, then along the winding direction of the electrode assembly, the winding terminal end 235 of the second electrode plate layer 23 is located upstream of the winding terminal end 215 of the first electrode plate layer 21.

In some embodiments, the part of the cut second insulating member 2130 that is not connected to the first electrode plate 212 is configured to form a winding start end of a first electrode plate layer of the electrode assembly in the next procedure.

Fig. 24 shows a schematic block diagram of a device 400 for preparing an electrode assembly 2 according to an embodiment of the present application. As shown in Fig. 24, the device 400 may include: a provision module 410, a cutting module 420 and a winding module 430. Specifically, the provision module 410 is configured to provide a first electrode plate layer assembly 210, a first separator assembly 220, a second electrode plate layer assembly 230 and a second separator assembly 240, wherein the first electrode plate layer assembly 210 includes a first insulating member 2110 and a first electrode plate 212 connected to each other, and one end of the first insulating member 2110 is connected to a winding start end 2121 of the first electrode plate 212; and the second electrode plate layer assembly 230 includes a second electrode plate 232, and the polarity of the second electrode plate 232 is opposite to that of the first electrode plate 212; the cutting module 420 is configured to perform a first cutting on the first electrode plate layer assembly 210, the first separator assembly 220 and the second separator assembly 240 at the first insulating member 2110, and to perform a first cutting on the second electrode plate layer assembly 230, to obtain a first electrode plate layer 21, a first separator 22, a second electrode plate layer 23 and a second separator 24, wherein the first separator 22 and the second separator 24 are configured to isolate the first electrode plate layer 21 from the second electrode plate layer 23, a part of the cut first insulating member 2110 forms a first insulating section 211 connected to the first electrode plate 212, the first electrode plate layer 21 includes the first insulating section 211 and the first electrode plate 212, and the end of the first insulating section 211 away from the first electrode plate 212 is a winding start end 214 of the first electrode plate layer 21; and the winding module 430 is configured to winding the first electrode plate layer 21, the first separator 22, the second electrode plate layer 23 and the second separator 24 to form the electrode assembly, wherein the winding start end 214 of the first electrode plate layer 21, a winding start end 221 of the first separator 22 and a winding start end 241 of the second separator 24 are substantially flush with one another; and along a winding direction X of the electrode assembly 2, a winding start end 234 of the second electrode plate layer 23 is substantially aligned with the winding start end 214 of the first electrode plate layer 21, or the winding start end 234 of the second electrode plate layer 23 is located downstream of the winding start end 214 of the first electrode plate layer 21.

While the present application has been described with reference to the preferred embodiments, various modifications may be made and components therein may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. An electrode assembly, comprising: a first electrode plate layer (21), a first separator (22), a second electrode plate layer (23) and a second separator (24), the first electrode plate layer (21), the first separator (22), the second electrode plate layer (23) and the second separator (24) being wound to form the electrode assembly,
wherein the first separator (22) and the second separator (24) are configured to isolate the first electrode plate layer (21) from the second electrode plate layer (23), and a winding start end (214) of the first electrode plate layer (21), a winding start end (221) of the first separator (22) and a winding start end (241) of the second separator (24) are substantially aligned with one another;
the first electrode plate layer (21) comprises a first insulating section (211) and a first electrode plate (212) connected to each other, and the first insulating section (211) is arranged at the winding start end (2121) of the first electrode plate (212); the end of the first insulating section (211) away from the first electrode plate (212) is the winding start end (214) of the first electrode plate layer (21);
the second electrode plate layer (23) comprises a second electrode plate (232), and the polarity of the second electrode plate (232) is opposite to that of the first electrode plate (212); and along a winding direction of the electrode assembly, a winding start end (234) of the second electrode plate layer (23) is substantially aligned with the winding start end (214) of the first electrode plate layer (21), or the winding start end (234) of the second electrode plate layer (23) is located downstream of the winding start end (214) of the first electrode plate layer (21).

2. The electrode assembly according to claim 1, wherein the first insulating section (211) comprises a first insulating sublayer (2111) and a second insulating sublayer (2112) arranged opposite to each other, and the first insulating sublayer (2111) and the second insulating sublayer (2112) clamp at least a partial area of the winding start end (2121) of the first electrode plate (212) such that the first insulating section (211) is connected to the first electrode plate (212).

3. The electrode assembly according to claim 1 or 2, wherein the first electrode plate layer (21) further comprises a second insulating section (213) connected to the first electrode plate (212); the second insulating section (213) is arranged at a winding terminal end (2122) of the first electrode plate (212), and the end of the second insulating section (213) away from the first electrode plate (212) is a winding terminal end (215) of the first electrode plate layer (21);
the winding terminal end (215) of the first electrode plate layer (21), a winding terminal end (222) of the first separator (22) and a winding terminal end (242) of the second separator (24) are substantially aligned with one another; and
along the winding direction of the electrode assembly, a winding terminal end (235) of the second electrode plate layer (23) is substantially aligned with the winding terminal end (215) of the first electrode plate layer (21), or the winding terminal end (235) of the second electrode plate layer (23) is located upstream of the winding terminal end (215) of the first electrode plate layer (21).

4. The electrode assembly according to claim 3, wherein the second insulating section (213) comprises a third insulating sublayer (2131) and a fourth insulating sublayer (2132) arranged opposite to each other, and the third insulating sublayer (2131) and the fourth insulating sublayer (2132) clamp at least a partial area of the winding terminal end (2122) of the first electrode plate (212) such that the second insulating section (213) is connected to the first electrode plate (212).

5. The electrode assembly according to any one of claims 1 to 4, wherein the second electrode plate layer (23) comprises a third insulating section (231) connected to the second electrode plate (232); the third insulating section (231) is arranged at a winding start end (2321) of the second electrode plate (232); and the end of the third insulating section (231) away from the second electrode plate (232) is the winding start end (234) of the second electrode plate layer (23).

6. The electrode assembly according to claim 5, wherein the third insulating section (231) comprises a fifth insulating sublayer (2311) and a sixth insulating sublayer (2312) arranged opposite to each other, and the fifth insulating sublayer (2311) and the sixth insulating sublayer (2312) clamp at least a partial area of the winding start end (2321) of the second electrode plate (232) such that the third insulating section (231) is connected to the second electrode plate (232).

7. The electrode assembly according to claim 5 or 6, wherein the second electrode plate layer (23) further comprises a fourth insulating section (233) connected to the second electrode plate (232); the fourth insulating section (233) is arranged at a winding terminal end (2322) of the second electrode plate (232), and the end of the fourth insulating section (233) away from the second electrode plate (232) is the winding terminal end (235) of the second electrode plate layer (23).

8. The electrode assembly according to claim 7, wherein the fourth insulating section (233) comprises a seventh insulating sublayer (2331) and an eighth insulating sublayer (2332) arranged opposite to each other, and the seventh insulating sublayer (2331) and the eighth insulating sublayer (2332) clamp at least a partial area of the winding terminal end (2322) of the second electrode plate (232) such that the fourth insulating section (233) is connected to the second electrode plate (232).

9. The electrode assembly according to any one of claims 5 to 8, wherein the first electrode plate (212) is a positive electrode plate and the second electrode plate (232) is a negative electrode plate, in the winding direction of the electrode assembly, the first insulating section (211) has a length greater than that of the third insulating section (231) and the first electrode plate (212) has a length less than that of the second electrode plate (232), and in a winding axis direction of the electrode assembly, the first electrode plate (212) has a length less than that of the second electrode plate (232); or
the first electrode plate (212) is a negative electrode plate and the second electrode plate (232) is a positive electrode plate, in the winding direction of the electrode assembly, the first insulating section (211) has a length less than that of the third insulating section (231) and the first electrode plate (212) has a length greater than that of the second electrode plate (232), and in the winding axis direction of the electrode assembly, the first electrode plate (212) has a length greater than that of the second electrode plate (232).

10. The electrode assembly according to claim 7 or 8, wherein the first electrode plate (212) is a positive electrode plate and the second electrode plate (232) is a negative electrode plate, and in the winding direction of the electrode assembly, the second insulating section (213) of the first electrode plate layer (21) has a length greater than that of the fourth insulating section (233); or
the first electrode plate (212) is a negative electrode plate and the second electrode plate (232) is a positive electrode plate, and in the winding direction of the electrode assembly, the second insulating section (213) of the first electrode plate layer (21) has a length less than that of the fourth insulating section (233).

11. The electrode assembly according to claim 7, 8 or 10, wherein at least one of the first insulating section (211), the second insulating section (213), the third insulating section (231) and the fourth insulating section (233) is provided with a plurality of through holes.

12. A battery cell, comprising:
the electrode assembly of any one of claims 1 to 11.

13. A battery, comprising:
a plurality of battery cells, each of which being the battery cell of claim 12.

14. An electrical device, comprising:
the battery of claim 13, the battery being configured to supply electric energy.

15. A method for preparing an electrode assembly, the method comprising:
providing a first electrode plate layer assembly (210), a first separator assembly (220), a second electrode plate layer assembly (230) and a second separator assembly (240), wherein the first electrode plate layer assembly (210) comprises a first insulating member (2110) and a first electrode plate (212) connected to each other, and one end of the first insulating member (2110) is connected to a winding start end (2121) of the first electrode plate (212); and the second electrode plate layer assembly (230) comprises a second electrode plate (232), and the polarity of the second electrode plate (232) is opposite to that of the first electrode plate (212);
performing a first cutting on the first electrode plate layer assembly (210), the first separator assembly (220) and the second separator assembly (240) at the first insulating member (2110), and performing a first cutting on the second electrode plate layer assembly (230), to obtain a first electrode plate layer (21), a first separator (22), a second electrode plate layer (23) and a second separator (24), wherein the first separator (22) and the second separator (24) are configured to isolate the first electrode plate layer (21) from the second electrode plate layer (23), a part of the cut first insulating member (2110) forms a first insulating section (211) connected to the first electrode plate (212), the first electrode plate layer (21) comprises the first insulating section (211) and the first electrode plate (212), and the end of the first insulating section (211) away from the first electrode plate (212) is a winding start end (214) of the first electrode plate layer (21);
winding the first electrode plate layer (21), the first separator (22), the second electrode plate layer (23) and the second separator (24) to form the electrode assembly, wherein the winding start end (214) of the first electrode plate layer (21), a winding start end (221) of the first separator (22) and a winding start end (241) of the second separator (24) are substantially flush with one another; and along a winding direction of the electrode assembly, a winding start end (234) of the second electrode plate layer (23) is substantially aligned with the winding start end (214) of the first electrode plate layer (21), or the winding start end (234) of the second electrode plate layer (23) is located downstream of the winding start end (214) of the first electrode plate layer (21).

16. The method according to claim 15, further comprising:
performing a first cutting on a first electrode plate assembly (2120) to obtain a first cut end and a second cut end at the cut position, the second cut end being the winding start end (2121) of the first electrode plate (212); and
separating the first cut end from the second cut end by a first preset distance, and pasting the first insulating member (2110) therebetween such that opposite ends of the first insulating member (2110) are respectively connected to the first cut end and the second cut end to obtain the first electrode plate layer assembly (210).

17. The method according to claim 15 or 16, wherein the second electrode plate layer assembly (230) comprises a third insulating member (2310) connected to the second electrode plate (232), and one end of the third insulating member (2310) is arranged at a winding start end (2321) of the second electrode plate (232); and
the step of performing a first cutting on the first electrode plate layer assembly (210), the first separator assembly (220) and the second separator assembly (240) at the first insulating member (2110), and performing a first cutting on the second electrode plate layer assembly (230) comprises:
performing a first cutting on the second electrode plate layer assembly (230) at the third insulating member (2310) while performing a first cutting on the first electrode plate layer assembly (210), the first separator assembly (220) and the second separator assembly (240) at the first insulating member (2110), wherein a part of the cut third insulating member (2310) forms a third insulating section (231) connected to the second electrode plate (232), the second electrode plate layer (23) comprises the third insulating section (231) and the second electrode plate (232), and the end of the third insulating section (231) away from the second electrode plate (232) is the winding start end (234) of the second electrode plate layer (23); and along the winding direction of the electrode assembly, the winding start end (234) of the second electrode plate layer (23) is substantially aligned with the winding start end (214) of the first electrode plate layer (21).

18. The method according to claim 17, further comprising:
performing a first cutting on a second electrode plate assembly (2320) to obtain a fifth cut end and a sixth cut end at the cut position, the sixth cut end being the winding start end (2321) of the second electrode plate (232); and
separating the fifth cut end from the sixth cut end by a second preset distance, and pasting the third insulating member (2310) therebetween such that opposite ends of the third insulating member (2310) are respectively connected to the fifth cut end and the sixth cut end to obtain the second electrode plate layer assembly (230).

19. The method according to claim 17 or 18, wherein the part of the cut third insulating member (2310) that is not connected to the second electrode plate (232) is configured to form a winding terminal end of a second electrode plate layer of an electrode assembly in the previous procedure.

20. The method according to claim 15 or 16, wherein the first cutting of the first electrode plate layer assembly (210), the first separator assembly (220) and the second separator assembly (240) at the first insulating member (2110), and the first cutting of the second electrode plate layer assembly (230) are completed by two cuttings; and
along the winding direction of the electrode assembly, the winding start end (234) of the second electrode plate layer (23) is located downstream of the winding start end (214) of the first electrode plate layer (21).

21. The method according to any one of claims 15 to 20, wherein the part of the cut first insulating member (2110) that is not connected to the first electrode plate layer (21) is configured to form a winding terminal end of a first electrode plate layer of the electrode assembly in the previous procedure.

22. The method according to any one of claims 15 to 24, wherein the first electrode plate layer (21) assembly further comprises a second insulating member (2130), and one end of the second insulating member (2130) is connected to a winding terminal end (2122) of the first electrode plate (212); and
the method further comprises:
performing a second cutting on the first electrode plate layer assembly (210), the first separator assembly (220) and the second separator assembly (240) at the second insulating member (2130), and performing a second cutting on the second electrode plate layer assembly (230), to obtain a winding terminal end (215) of the first electrode plate layer (21), a winding terminal end (222) of the first separator (22), a winding terminal end (235) of the second electrode plate layer (23) and a winding terminal end (242) of the second separator (24) at the cut position, a part of the cut second insulating member (2130) forms a second insulating section (213) connected to the first electrode plate (212), the first electrode plate layer (21) further comprises the second insulating section (213), and the end of the second insulating section (213) away from the first electrode plate (212) is the winding terminal end (215) of the first electrode plate layer (21); the winding terminal end (215) of the first electrode plate layer (21), the winding terminal end (222) of the first separator (22) and the winding terminal end (242) of the second separator (24) are substantially aligned with one another; and along the winding direction of the electrode assembly, the winding terminal end (235) of the second electrode plate layer (23) is substantially aligned with the winding terminal end (215) of the first electrode plate layer (21), or the winding terminal end (235) of the second electrode plate layer (23) is located upstream of the winding terminal end (215) of the first electrode plate layer (21).

23. The method according to claim 22, further comprising:
performing a second cutting on the first electrode plate assembly (2120) to obtain a third cut end and a fourth cut end at the cut position, the third cut end being the winding terminal end (2122) of the first electrode plate (212); and
separating the third cut end from the fourth cut end by a first preset distance, and pasting the second insulating member (2130) therebetween such that opposite ends of the second insulating member (2130) are respectively connected to the third cut end and the fourth cut end to obtain the first electrode plate layer assembly (210).

24. The method according to claim 22 or 23, wherein the second electrode plate layer assembly (230) further comprises a fourth insulating member (2330), and one end of the fourth insulating member (2330) is connected to a winding terminal end (2322) of the second electrode plate (232); and
the step of performing a second cutting on the first electrode plate layer assembly (210), the first separator assembly (220) and the second separator assembly (240) at the second insulating member (2130), and performing a second cutting on the second electrode plate layer assembly (230) comprises:
performing a second cutting on the second electrode plate layer assembly (230) at the fourth insulating member (2330) while performing a second cutting on the first electrode plate layer assembly (210), the first separator assembly (220) and the second separator assembly (240) at the second insulating member (2130), wherein a part of the cut fourth insulating member (2330) forms a fourth insulating section (233) connected to the second electrode plate (232), the second electrode plate layer (23) further comprises the fourth insulating section (233), and the end of the fourth insulating section (233) away from the second electrode plate (232) is the winding terminal end (235) of the second electrode plate layer (23); and along the winding direction of the electrode assembly, the winding terminal end (235) of the second electrode plate layer (23) is substantially aligned with the winding terminal end (215) of the first electrode plate layer (21).

25. The method according to claim 24, further comprising:
performing a second cutting on the second electrode plate assembly (2320) to obtain a seventh cut end and an eighth cut end at the cut position, the seventh cut end being the winding terminal end (2322) of the second electrode plate (232); and
separating the seventh cut end from the eighth cut end by a second preset distance, and pasting the fourth insulating member (2330) therebetween such that opposite ends of the fourth insulating member (2330) are respectively connected to the seventh cut end and the eighth cut end to obtain the second electrode plate layer assembly (230).

26. The method according to claim 24 or 25, wherein the part of the cut fourth insulating member (2330) that is not connected to the second electrode plate (232) is configured to form a winding start end of a second electrode plate layer of an electrode assembly in the next procedure.

27. The method according to claim 22 or 23, wherein the second cutting of the first electrode plate layer assembly (210), the first separator assembly (220) and the second separator assembly (240) at the second insulating member (2130), and the second cutting of the second electrode plate layer assembly (230) are completed by two cuttings; and
along the winding direction of the electrode assembly, the winding terminal end (235) of the second electrode plate layer (23) is located upstream of the winding terminal end (215) of the first electrode plate layer (21).

28. The method according to any one of claims 22 to 27, wherein the part of the cut second insulating member (2130) that is not connected to the first electrode plate (212) is configured to form a winding start end of a first electrode plate layer of the electrode assembly in the next procedure.

29. A device for preparing an electrode assembly, the device comprising:
a provision module, configured to provide a first electrode plate layer assembly (210), a first separator assembly (220), a second electrode plate layer assembly (230) and a second separator assembly (240), wherein the first electrode plate layer assembly (210) comprises a first insulating member (2110) and a first electrode plate (212) connected to each other, and one end of the first insulating member (2110) is connected to a winding start end (2121) of the first electrode plate (212); and the second electrode plate layer assembly (230) comprises a second electrode plate (232), and the polarity of the second electrode plate (232) is opposite to that of the first electrode plate (212);
a cutting module, configured to perform a first cutting on the first electrode plate layer assembly (210), the first separator assembly (220) and the second separator assembly (240) at the first insulating member (2110), and to perform a first cutting on the second electrode plate layer assembly (230), to obtain a first electrode plate layer (21), a first separator (22), a second electrode plate layer (23) and a second separator (24), wherein the first separator (22) and the second separator (24) are configured to isolate the first electrode plate layer (21) from the second electrode plate layer (23), a part of the cut first insulating member (2110) forms a first insulating section (211) connected to the first electrode plate (212), the first electrode plate layer (21) comprises the first insulating section (211) and the first electrode plate (212), and the end of the first insulating section (211) away from the first electrode plate (212) is a winding start end (214) of the first electrode plate layer (21); and
a winding module, configured to wind the first electrode plate layer (21), the first separator (22), the second electrode plate layer (23) and the second separator (24) to form the electrode assembly, wherein the winding start end (214) of the first electrode plate layer (21), a winding start end (221) of the first separator (22) and a winding start end (241) of the second separator (24) are substantially flush with one another; and along a winding direction of the electrode assembly, a winding start end (234) of the second electrode plate layer (23) is substantially aligned with the winding start end (214) of the first electrode plate layer (21), or the winding start end (234) of the second electrode plate layer (23) is located downstream of the winding start end (214) of the first electrode plate layer (21).
